(19) Europäisches Patentamt
European Patent Office
Office européen des brevets

(11) EP 0 781 305 B1

(12) # FASCICULE DE BREVET EUROPEEN

(45) Date de publication et mention de la délivrance du brevet:
**14.11.2001 Bulletin 2001/46**

(21) Numéro de dépôt: **95931246.3**

(22) Date de dépôt: **14.09.1995**

(51) Int Cl.[7]: **C08J 3/03**, C08L 83/04

(86) Numéro de dépôt international:
**PCT/FR95/01182**

(87) Numéro de publication internationale:
**WO 96/08529 (21.03.1996 Gazette 1996/13)**

(54) **DISPERSION SILICONE AQUEUSE, RETICULABLE EN UN ELASTOMERE ADHERENT, SELON UN MECANISME REACTIONNEL DE CONDENSATION**

DURCH KONDENSATION ZUM SELBSTHÄRTENDEN ELASTOMER HÄRTENDE WÄSSRIGE SILIKONDISPERSION

AQUEOUS SILICONE DISPERSION CROSS-LINKABLE INTO AN ADHESIVE ELASTOMER USING A CONDENSATION REACTION MECHANISM

(84) Etats contractants désignés:
**AT BE DE ES FR GB IE IT NL**

(30) Priorité: **16.09.1994 FR 9411410**

(43) Date de publication de la demande:
**02.07.1997 Bulletin 1997/27**

(73) Titulaire: **RHODIA CHIMIE**
**92408 Courbevoie Cédex (FR)**

(72) Inventeurs:
- **CARDINAUD, Denis**
**F-69100 Villeurbanne (FR)**
- **FEDER, Michel**
**F-68720 Zillisheim (FR)**
- **FISCHER, Christian**
**F-38200 Luzinay (FR)**

(74) Mandataire: **Fleurance, Raphael et al**
**Cabinet Plasseraud**
**27, rue de la Villette**
**69003 Lyon (FR)**

(56) Documents cités:
**EP-A- 0 201 284**
**EP-A- 0 261 414**
**EP-A- 0 266 729**
**EP-A- 0 419 986**
**EP-A- 0 572 006**
**EP-A- 0 655 475**
**US-A- 5 183 845**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 781 305 B1

Printed by Jouve, 75001 PARIS (FR)

## Description

### DOMAINE TECHNIQUE :

Le domaine de la présente invention est celui des compositions silicones durcissables par réticulation et utilisables notamment comme mastic ou tout autre matériau d'étanchéification, ou pour former tout type de revêtement par exemple dans des peintures.

Plus précisément, l'invention concerne une dispersion silicone aqueuse, formant un élastomère adhérent par élimination, notamment d'eau et éventuellement d'alcool et/ou d'acide carboxylique, selon des mécanismes de polycondensation intervenant, avantageusement, à température ambiante.

### ART ANTERIEUR :

Les silicones ou polyorganosiloxanes, tels que le $\alpha,\omega$-(dihydroxy)polydiorganosiloxane, sont connus, pour entrer dans la composition de mastics silicones standards comprenant, en outre, des réticulants du type alkyltrialcoxysilane, des catalyseurs de polycondensation du type sel d'étain et des charges. De telles compositions se sont avérées peu commodes à l'utilisation pour réaliser, par exemple, des joints d'étanchéification, des films ou des revêtements, car leurs états pâteux et visqueux rendent difficiles leur manipulation et leur mise sous une forme donnée.

De plus, ces compositions présentent l'inconvénient de n'être pas dispersibles ou solubles dans l'eau, ce qui complique leur utilisation, en particulier parce que les outils utilisés pour leur application ne sont, de fait, pas aisément lavables à l'eau.

Par ailleurs, ces compositions ont également le désavantage de ne pas être "peignables" : les peintures n'accrochent pas dessus.

Pour pallier ces graves défauts, on a développé des systèmes de formation de mastic ou de film réticulable, à partir d'émulsion aqueuse à base d'huile silicone réticulable en un élastomère par condensation (élimination d'eau par exemple).

Bien que d'application plus pratique, ces émulsions aqueuses de silicone ont soulevé un certain nombre de difficultés techniques :

- stabilité au stockage,
- temps de durcissement trop long,
- propriétés mécaniques médiocres (dureté, élasticité),
- défaut de thixotropie,
- faibles propriétés d'adhérence sur les supports usuels.

Diverses propositions de l'art antérieur ont tenté de satisfaire, en vain, un tel cahier des charges.

On connaît ainsi par la demande de brevet allemand **N° 2 912 431**, un latex de polyorganosiloxane obtenu à partir d'une émulsion, au sein de laquelle intervient la polymérisation d'un organosiloxane cyclique, conduisant un polyorganosiloxane à extrémités OH. Cette émulsion comprend également un trialcoxysilane organofonctionnel, utile comme agent réticulation. Ces compositions connues ne donnent pas satisfaction, en ce qui concerne la stabilité de l'émulsion et les propriétés d'adhérence.

La demande de brevet allemand **N° 3 019 655** décrit une émulsion silicone qui, après élimination d'eau, peut être convertie en un élastomère dans des conditions ambiantes. Cette émulsion silicone comprend également de la silice amorphe introduite sous forme de dispersion colloïdale. Or, de telles dispersions de silice ne sont pas particulièrement stables, si bien que le pH du mélange est un paramètre critique très délicat à fixer. Par ailleurs, l'incorporation de silice est à l'origine d'une certaine inhomogénéité de dureté de l'élastomère réticulé obtenable. Ceci est dû au fait que la silice a, en effet, tendance à réagir de façon parasite avec les extrémités OH réactives de l'huile silicone.

Dans d'autres propositions antérieures la charge siliceuse est du silicate de soude (**US N° 4 244 849**) ou de la silice amorphe en poudre (**FR N° 2 463 163**).

Ces trois derniers brevets enseignent que pour obtenir une émulsion monocomposante stable au stockage, il faut fixer son pH à des valeurs supérieures ou égales à 8,5 ou 9, de préférence à 10. Cependant, les procédés selon ces brevets ne répondent pas aux attentes du domaine technique, en matière de stabilité, de propriétés mécaniques et d'adhérence.

La demande de brevet allemand **N° 2 943 832** décrit une émulsion silicone qui diffère de celle objet de la demande de brevet allemand **N° 3 019 655** étudiée supra, seulement par une plus haute teneur en matière sèche (> à 60 %). Un grand inconvénient de cette émulsion est qu'elle doit posséder un pH supérieur à 9, cet inconvénient étant encore accentué par le fait que le pH est fixé à l'aide d'une amine, qui provoque des nuisances, en particulier d'ordre odorant. Enfin, les propriétés de résilience et d'adhérence de cette émulsion silicone connue restent médiocres.

La demande de brevet européen **N° 0 266 729** divulgue une émulsion silicone réticulable en un élastomère par condensation, comprenant un α,ω-dihydroxypolydiorganosiloxane, un tensioactif permettant d'obtenir une émulsion, un catalyseur de durcissement et un agent de réticulation formé par une résine silicone de type siliconate, éventuellement associée à une résine silicone hydroxylée comportant jusqu'à 10 % en poids de radicaux OH. Le pH de cette émulsion est supérieur à 8. Bien que cette alcalinité procure des résultats légèrement meilleurs sur le plan de l'adhérence, la solution proposée par cette demande de brevet européen n'apparaît pas comme étant satisfaisante.

Le brevet américain **N° 4 554 187** propose une émulsion en silicone convertible en un élastomère dans des conditions ambiantes, par élimination d'eau et d'alcool et comprenant un polydiorganosiloxane à extrémités hydroxyles, une résine silicone alcoxy ou acyloxy fonctionnelle réactive et utile comme agent de réticulation, un catalyseur du type sels organostanneux, des charges thixotropiques de nature siliceuse ou non et des charges non thixotropiques telles que $Ca(OH)_2$, l'extrait sec de cette émulsion étant compris entre 20 et 85 %. La résine silicone réticulante acyloxy ou alcoxyfonctionnelle peut être une résine méthyl ou méthoxysilicone non aminée, de formule $CH_3\ Si\ (O)_{1,1}\ (OCH_3)_{0,8}$. Cette résine est introduite sous forme d'émulsion. Les compositions selon ce brevet US contiennent nécessairement un tensioactif anionique, imposé par la méthodologie de préparation de l'huile silicone dihydroxylée, par polymérisation en émulsion. Un tel tensioactif anionique nuit à la stabilité de l'émulsion. Il est à noter également que la présence de la résine silicone acyloxy ou alcoxy fonctionnalisée réticulante est un facteur d'inhibition de la polymérisation en émulsion, dès lors qu'elle est ajoutée avant l'étape de polymérisation. En conséquence, cette proposition technique n'est pas satisfaisante et ce d'autant moins que les performances en matière de résilience, élasticité et adhérence sont faibles.

La demande de brevet européen **N° 0 359 676** concerne des dispersions aqueuses réticulables, utilisables notamment comme mastic, et comprenant une résine silicone hydroxylée à titre de réticulant d'une huile α, ω-(dihydroxy) polydiorganosiloxane, ladite réticulation s'effectuant en présence d'un catalyseur de condensation stanneux. Il s'avère que ces compositions émulsifiées sont peu adhérentes, en particulier sur le verre. A pH neutre ou acide, leur adhérence est même nulle.

La demande de brevet européen **N° 0 572 006** concerne des dispersions aqueuses de polyorganosiloxanes, qui ont pour vocation d'être stables au stockage et prêtes à l'emploi. Ces dispersions aqueuses réticulables comprennent un POS α,ω dihydroxylé (α,ω-diOH-PDMS), un sel d'étain à titre de catalyseurs de condensation, une résine POS à motifs D et T de PM < 20 000, un composé amino silicié et de l'alcool polyvinylique.

Le composé amino silicié peut être un monosilalalcoxylé et aminé ou un POS à motif MD ou MDT et non alcoxylé.

Cette dispersion ne comprend pas de tensioactifs.

Les performances, notamment sur le plan de l'adhérence, de cette dispersion aqueuse silicone réticulable reste perfectible.

La demande de brevet européen **N° 0 201 284** décrit des émulsions silicones aqueuses, pâteuses, stables au stockage et utiles comme matériau d'étanchéification. Ces émulsions contiennent une émulsion d'un POS α,ω-dihydroxylé stabilisé en émulsion par un tensioactif anionique, un catalyseur de condensation à l'étain, un réticulant du type monosilane, une charge inerte non silicique, et éventuellement un promoteur d'adhérence du type aminoalkylalcoxymonosilane.

L'emploi d'un tel promoteur d'adhérence ne permet pas d'atteindre des résultats extrêmement satisfaisants sur ce plan.

## EXPOSE SUCCINCT DE L'INVENTION :

Dans cet état de faits, l'un des objectifs essentiels de la présente invention est de proposer une dispersion (émulsion) silicone aqueuse,

- apte à réticuler en un élastomère par élimination d'eau et/ou d'alcool et/ou d'un reste carboxylique du type acyloxy, notamment dans des conditions atmosphériques ambiantes,
- et remédiant aux lacunes et aux inconvénients des émulsions connues de ce type.

Plus particulièrement, la présente invention vise à optimiser les propriétés d'adhérence sur tout support usuel : verre, béton, bois, métaux - aluminium-céramiques..., sans sacrifier aux autres spécifications du cahier des charges technique, dont notamment la stabilité, l'élasticité, la résilience, la dureté, la résistance mécanique et la modicité du coût de revient.

Un autre objectif de la présente invention est de proposer une dispersion aqueuse de silicone réticulable par condensation, qui réticule correctement et suffisamment rapidement en un élastomère conservant ses propriétés mécaniques au cours de son vieillissement.

Un autre objectif de l'invention est de proposer une dispersion aqueuse de silicone de type décrit ci-dessus,

conduisant à un élastomère présentant une résistance à la flamme améliorée.

Un autre objectif de l'invention est de fournir une dispersion aqueuse silicone facilement manipulable et conformable, notamment en vue des applications de type mastic, matériau d'étanchéification, joint, réalisation de film ou de revêtement divers.

Un autre objectif de l'invention est de fournir un mastic, un matériau d'étanchéification, un film ou un revêtement divers (adhérent), comportant la susdite dispersion et/ou l'élastomère réticulé qui en est issu.

Ces objectifs et d'autres sont atteints par la présente invention, qui procède de la mise en évidence, après de longues études et expérimentations et de manière tout-à-fait surprenante et inattendue, que l'incorporation d'un composé aminé et silicié à une émulsion silicone, procure des qualités mécaniques ainsi que des propriétés d'adhérence, à l'élastomère réticulé obtenu par réticulation de l'émulsion silicone aqueuse considérée. Cette dernière a également pour avantage et caractéristique d'avoir une grande stabilité physicochimique.

Il s'ensuit que la présente invention concerne une dispersion silicone aqueuse, réticulable en un élastomère par élimination notamment d'eau et éventuellement d'alcool et/ou d'acide carboxylique,

ladite dispersion étant à base :

- A• d'au moins un polydiorganosiloxane (**A**) présentant, par molécule, au moins deux groupements condensables ou hydrolysables $OR^a$ avec $R^a$ = H ou alkyle,
- B• et d'au moins un tensioactif (**B**),
- C• au moins un composé aminé et silicié (**C**) formé de plusieurs unités récurrentes de formule moyenne (**I**) suivante :

$$\text{(I)} \qquad R^1_x R^2_y (OR^3)_z Si\, O_{\frac{4-(x+y+z)}{2}}$$

dans laquelle :

  - ° $R^1$ représente un groupement monovalent exempt d'azote, de nature identique ou différente d'une unité récurrente à l'autre, et correspondant à l'hydrogène, un alkyle en $C_1$-$C_6$, un aryle ou un alcényle en $C_2$-$C_8$, éventuellement substitué de préférence par un radical halogène ou halogéné, $R^1$ étant plus particulièrement sélectionné dans le groupe comprenant : H, alkyle en $C_1$-$C_4$ éventuellement halogéné ; les groupements méthyle, éthyle, propyle, trifluoro-3,3,3-propyle, vinyle, allyle et phényle étant plus spécialement préférés ;
  - ° $R^2$ représente un groupement monovalent hydrocarboné, lié au silicium par une liaison Si-C et contenant au moins un atome d'azote, $R^2$ étant de nature identique ou différente d'une unité récurrente à l'autre ;
  - ° $R^3$ est un groupement hydrocarboné comprenant de 1 à 18 atomes de carbone et, de préférence, répondant à la même définition que celle donnée ci-dessus pour $R^1$,
  - ° x, y et z sont des nombres entiers ou décimaux positifs inférieurs à 4,
  - ° et $x + y + z < 4$

- D• éventuellement au moins une résine silicone hydroxylée et/ou alcoxylée (**D**)
- E• éventuellement au moins un alcoxysilane (**E**) fournisseur des extremités $-OR^a$ du polydiorganosiloxane (**A**)
- F• éventuellement au moins un catalyseur de condensation (**F**)
- G• et éventuellement au moins une charge (**G**) siliceuse ou non.

caractérisée en ce qu'elle contient au moins un composé aminé et silicié (**C**) sélectionné dans la famille de ses dérivés alcoxylés et formé de plusieurs unités (**I**), i.e. (**C**) comporte des unités (**I**) dans lesquelles $z > 0$, de préférence $z < 2$ et plus préférentiellement encore $0,2 < z \leq 1,5$.

Par ces moyens, la Demanderesse a. eu le mérite d'obtenir des compositions silicones en dispersion aqueuse, réticulables en un élastomère très adhérent, ce qui constituait, a priori, un obstacle technique particulièrement insurmontable.

Les élastomères durcis issus des dispersions aqueuses silicones selon l'invention possèdent un niveau d'adhérence sur verre très supérieur à ceux obtenus avec les dispersions aqueuses silicones connues. Cette supériorité se vérifie même dans le cas de compositions faiblement acides pourtant synonymes d'adhérence médiocre.

En outre et contre toute attente, la mise en oeuvre de l'additif (**C**) aminofonctionnalisé n'a aucune répercussion négative, notamment, sur le plan des odeurs ou d'éventuelles colorations indésirables.

**DESCRIPTION DETAILLEE DE L'INVENTION :**

De préférence, le composé aminé et silicié est une résine présentant une fonctionnalité moyenne en Silicium supérieure à 2, ce qui correspond, dans la formule (**I**) à x + y < 2,

- x et y étant de préférence respectivement inférieurs à 2, à 1 et à 1,5 ;
- x et y étant plus préférentiellement encore respectivement compris entre 1 et 1,8, entre 0,1 et 0,8, et entre 0,2 et 1,2.

Cette résine silicone (**C**) aminofonctionnalisée peut éventuellement être au moins en partie remplacée par ses précurseurs polyorganosiloxaniques d'une part, et aminoalkylés, d'autre part.

L'intérêt de cette résine silicone comportant des groupements aminés, éventuellement salifiée et incorporée dans la dispersion conformément à l'invention, provient probablement du fait qu'elle constitue un promoteur d'adhérence particulièrement bien dispersé et se présente sous une forme physicochimique optimale pour l'effet recherché. Elle peut, en effet, diffuser aisément vers l'interface, support/dispersion, pour pouvoir y exercer son action adhérente, au détriment des tensioactifs présent dans la dispersion et ayant un effet antagoniste à cet égard. La résine aminofonctionnelle agit en compétition avec les tensioactifs.

La dispersion aqueuse selon l'invention se présente comme une émulsion biphasique, dans laquelle la phase continue est constituée par l'eau et la phase discontinue, notamment par l'huile silicone polydiorganosiloxane.

Conformément à un premier mode de réalisation préférée de l'invention, le composé aminé et silicié est un polyorganosiloxane formé par un copolymère comprenant les motifs récurrents suivants : D T T (N) ($OR^3$) avec :

motif D = $R^1_2$ Si $O_{2/2}$
motif T = $R^1$ Si $O_{3/2}$
motif T(N)= $R^2$ Si $O_{3/2}$

dans lesquels $R^1$, $R^2$, $R^3$ sont tels que définis supra et les radicaux - $OR^3$ terminaux sont portés par D et/ou T et/ou T(N), en ce que le ratio molaire D/D + T est inférieur ou égal à 100 %, de préférence à 50 % et plus préférentiellement encore est compris entre 5 et 50 %,
en ce que le paramètre z de la formule (**I**) [moles d'$OR^3$ / mole de Si] est compris entre 0,4 et 1,00,
et en ce que le pourcentage massique d'azote 14 par rapport à la totalité du polyorganosiloxane (**A**) est supérieur ou égal à 0,5 %, de préférence à 1 % et plus préférentiellement encore est compris entre 1 et 3 %.

Selon un deuxième mode de réalisation préférée de l'invention, le composé aminé et silicié est un polyorganosiloxane formé par un copolymère comprenant les motifs récurrents suivants : D Q T (N) ($OR^3$) avec :

motif D = $R^1_2$ Si $O_{2/2}$
motif T(N) = $R^2$ Si $O_{3/2}$
motif Q = Si $O_{4/2}$

dans lesquels $R^1$, $R^2$, $R^3$ sont tels que définis supra, [Formule (**I**)] et les radicaux - $OR^3$ terminaux sont portés par D et/ou T(N),
en ce que le ratio molaire D/D + Q est inférieur ou égal à 70 %, de préférence à 50 % et, plus préférentiellement encore, est compris entre 5 et 50 %,
en ce que le paramètre z de la formule (**I**) [moles d'$OR^3$ / mole de Si] est compris entre 0,4 et 1,00,
et en ce que le pourcentage massique d'azote 14 par rapport à la totalité du polyorganosiloxane (**A**) est supérieur ou égal à 0,5 %, de préférence à 1 % et plus préférentiellement encore est compris entre 1 et 3 %.

Selon un troisième mode de réalisation préférée de l'invention, le composé aminé et silicié est un polyorganosiloxane formé par un copolymère comprenant les motifs récurrents suivants : D T D (N) ($OR^3$) avec :

motif D = $R^1_2$ Si $O_{2/2}$
motif D(N) = $R^1$ $R^2$ Si $O_{2/2}$
motif T = $R^1$ Si $O_{3/2}$

dans lesquels $R^1$, $R^2$, $R^3$ sont tels que définis supra, [Formule (**I**)] et les radicaux - $OR^3$ terminaux sont portés par D et/ou T(N) en ce que le ratio molaire D/D + T est inférieur ou égal à 100 %, de préférence à 50 % et, plus préférentiellement encore, est compris entre 5 et 50 %.
en ce que le paramètre z de la formule (**I**) [moles d'$OR^3$ / mole de Si] est compris entre 0,4 et 1,00,
et en ce que le pourcentage molaire d'azote 14 par rapport à la totalité du polyorganosiloxane (**A**) est supérieur ou égal à 0,5 %, de préférence à 1 % et, plus préférentiellement encore, est compris entre 1 et 3 %.

La symbolisation T(**N**) ou D(**N**) dans les formules ci-dessus de motifs récurrents, indique que la fonctionnalité amine est portée par au moins un motif T ou D selon le cas.

Sans que cela ne soit limitatif, on peut préciser que le radical $R^2$ de la formule (**I**) répond avantageusement à la formule suivante : $(R^4)_2\ NR^5$

dans laquelle :

- les groupements $R^4$ sont identiques ou différents et représentent l'hydrogène ou $-R^6-NH_2$,
- les groupements $R^5$, $R^6$ étant des radicaux alkylènes divalents en $C_1$-$C_{10}$, éventuellement substitués,
- ou bien encore les groupements $R^4$ sont différents de l'hydrogène et forment ensemble un cycle à 5 - 7 chaînons renfermant au moins un hétéroatome, de préférence l'azote ou l'oxygène.

Ainsi, dans le cas où il ne comprend pas de $R^4$ cyclisés, le radical aminofonctionnalisé $R^2$ peut être, e.g. :

$$NH_2—(CH_2)_2—NH—(CH_2)_3— \text{ ou } NH_2—CH_2—CH_2—CH_2—$$

Dans le cas contraire, le radical N $(R^4)_2$ peut, par exemple, correspondre à :

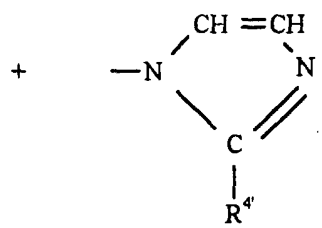

ou

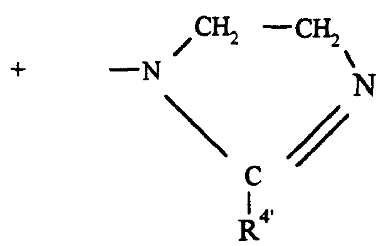

avec $R^{4'}$ = H ou alkyle, de préférence en $C_1$-$C_{10}$.

Il est à noter que la cyclisation des 2 radicaux $R^4$ en hétérocycle est un phénomène qui peut intervenir au sein de la dispersion, e.g. après mélange de tous ses constituants.

En outre, il va de soi que la dispersion n'est pas limitée à un seul type de substitut aminé $R^2$ pour l'additif (**C**). En effet, il est parfaitement envisageable de prévoir des radicaux $R^2$ de différentes natures.

Selon une modalité intéressante de l'invention, le composé aminé et silicié (**C**), qui est de préférence de structure de type résine, est salifié et comprend un ou des radicaux $R^2$ de formule suivante :

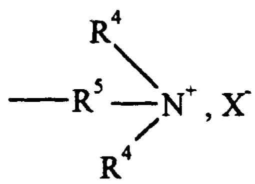

avec $R^4$ et $R^5$ tels que définis ci-dessus et X représentant un contre- anion choisi parmi les carboxylates, les halogénures, de préférence parmi les produits suivants : lactate, acétate, chlorure.

Cette résine silicone (**C**) aminoalkylée et salifiée, se trouve ainsi dans la phase continue aqueuse de la dispersion, le pH étant choisi de telle sorte que la résine (**C**) se maintienne sous forme ionisée. Le choix du pH s'effectue, de manière connue en soi, selon le pKa de l'acide qui correspond au contre-anion mis en oeuvre.

Etant donné qu'elle est ionisée cette résine peut être introduite dans la phase continue aqueuse de la dispersion où elle est solubilisée ou très finement dispersée, ce qui favorise la stabilité et l'adhérence du produit réticulé sur les supports usuels.

Dans le cas où la résine silicone aminoalkylée n'est pas salifiée, elle a naturellement vocation à être intégrée dans la phase huileuse silicone.

Il va de soi que l'on peut parfaitement envisager une variante dans laquelle au moins une partie de la résine est présente sous forme salifiée et au moins une autre partie est sous forme non salifiée.

La composition de la dispersion silicone aqueuse selon l'invention est avantageusement la suivante :

- -(**A**) - 100 parties en poids de l'huile silicone (**A**) à extrémités de formule : O-Si $(OR^a)_t (R^b)_{3-t}$ dans laquelle $R^a$ est tel que défini ci-dessus et $R^b$ = H ou radical hydrocarboné en $C_1$ - $C_6$ de préférence (cyclo)alkyle ou alcényle, éventuellement fonctionnalisé et t = 1, 2 ou 3, cette huile ayant une viscosité η à 25 °C, supérieure ou égale à 20 000 mPa.s ;
- -(**B**)- 0,5 à 10, de préférence 2 à 8 parties en poids du tensioactif (**B**) choisi parmi les ioniques, les amphotères ou les non ioniques, ces derniers étant préférés.
- -(**C**)- 0,5 à 10, de préférence 0,5 à 7 parties en poids de la résine silicone (**C**) aminoalkylée, éventuellement salifiée,
- -(**D**)- 0 à 20, de préférence 0 à 10 parties en poids d'au moins une résine silicone hydroxylée (**D**) présentant, par molécule, au moins deux motifs différents choisis parmi ceux de formules : $R^7{}_3$ $SiO_{0,5}$, $R^7{}_2$ SiO, $R^7SiO_{1,5}$ et $SiO_2$, les radicaux $R^7$, identiques ou différents, étant choisis parmi les radicaux vinyle, phényle, trifluoro-3,3,3 propyle et les radicaux alkyle linéaires ou ramifiés ayant de 1 à 6 atomes de carbone inclus, ladite résine ayant une teneur pondérale en groupe hydroxyle comprise entre 0,1 et 10%.
- -(**E**)- 0 à 5, de préférence 0 à 3 parties en poids de l'alcoxysilane (**E**) de formule $R^b{}_{3-t}$ Si $(OR^a)_{t+1}$ dans laquelle $R^a$ et $R^b$ sont identiques ou différents et, de même que t, sont tels que définis ci-dessus.
- -(**F**)- 0 à 3, de préférence 0 à 1,5 parties en poids du catalyseur (**F**) de condensation.
- -(**G**)- 0 à 250, de préférence 0 à 100 parties en poids de la charge renforçante siliceuse ou non.

Le constituant essentiel sur le plan pondéral est donc **l'huile silicone (A)** qui est, de préférence, un polydiorganosiloxane à extrémités hydroxyle ou alcoxyle. Les groupements organiques au sein de la chaine de cette huile (**A**) sont avantageusement séléctionnés parmi les composés suivants : hydrogène, (cyclo)alkyle $C_1$-$C_3$ ou alcényle par exemple vinyle ou allyle, amine.

Dans le cas où $R^a$ est différent de H (alcoxyle), la réaction de condensation s'effectue en principe après hydrolyse de l'alcoxyle $OR^a$ et/ou de l'alcoxyle porté par l'agent de réticulation.

Les α,ω-dihydroxypolydiorganosiloxanes sont particulièrement préférés à titre de produit (**A**). Il est, par ailleurs, préférable que la viscosité η à 25 °C de ces derniers soit d'au moins 100 mPa.s, de préférence d'au moins 50 000 mPa.s. C'est en effet notamment pour des viscosités η supérieures à 50 000 mPa.s que l'on obtient un élastomère présentant un ensemble de propriétés mécaniques convenables, en particulier au niveau de la dureté shore A et de l'allongement. En outre, plus la viscosité est élévée et plus les propriétés mécaniques se conservent lors du vieillissement de l'élastomère réticulé susceptible d'être obtenu à partir de la dispersion aqueuse. Les viscosités η à 25 °C choisies, en pratique, dans le cadre de l'invention sont comprises entre $5 \times 10^4$ et $15 \times 10^5$ mPa.s.

A titre d'exemple de composé (**A**), on peut citer le α,ω-dihydroxy(polydiméthylsiloxane).

Toutes les viscosités dont il est question dans le présent exposé correspondent à une grandeur de viscosité dynamique à 25 °C dite "Newtonienne", c'est-à-dire la viscosité dynamique qui est mesurée, de manière connue en soi, à un gradient de vitesse de cisaillement suffisament faible pour que la viscosité mesurée soit indépendante du gradient de vitesse.

Les radicaux organiques des α,ω-(dihydroxy)polydiorganopolysiloxanes qui - on l'a vu - sont des radicaux hydrocarbonés monovalents contenant jusqu'à 6 atomes de carbone, sont éventuellement substitués par des groupes cyano ou fluoro. Les substituants généralement utilisés du fait de leur disponibilité dans les produits industriels sont les radicaux méthyle, éthyle, propyle, phényle, vinyle et 3,3,3-trifluoropropyle. En général au moins 80 % en nombre de ces radicaux sont des radicaux méthyle.

Dans le cadre de la présente invention, on peut spécialement utiliser les α, ω-(dihydroxy)polydiorganosiloxanes préparés par le procédé de polymérisation anionique décrit dans les brevets américains précités : **US-A-2891 920** et surtout **US-A 3 294 725** (cités comme référence). Le polymère obtenu est stabilisé anioniquement par un agent tensio-actif qui, conformément à l'enseignement de **US-A-3 294 725** est de préférence le sel d'un métal alcalin d'un acide hydrocarboné aromatique sulfonique, l'acide libre jouant également le rôle de catalyseur de polymérisation.

Le catalyseur et l'agent tensioactif préférés sont l'acide dodécylbenzènesulfonique ou l'acide alkylsulfurique et leurs sels de métaux alcalins, en particulier leurs sels de sodium. On peut ajouter éventuellement d'autres agents tensioactifs anioniques ou non anioniques. Toutefois, cet ajout n'est pas nécessaire car, conformément à l'enseignement de **US-A-3 294 725**, la quantité d'agent tensioactif anionique résultant de la neutralisation de l'acide sulfonique est suffisante pour stabiliser l'émulsion de polymère. Cette quantité est généralement inférieure à 3 %, de préférence 1,5 % du poids de l'émulsion.

Ce procédé de polymérisation en émulsion est particulièrement intéressant car il permet d'obtenir directement une émulsion contenant l'huile (**A**). Par ailleurs, ce procédé permet de pouvoir obtenir sans difficulté du $\alpha,\omega$-(dihydroxy) polydiorganosiloxane (**A**) en émulsion de très haute viscosité.

Conformément à l'invention, on préferera toutefois partir d'$\alpha,\omega$-(dihydroxy)polydiorganosiloxane déjà polymérisé pour la préparation l'émulsion. Celui-ci est ensuite mis en émulsion aqueuse en stabilisant les émulsions par un agent tensioactif ionique et/ou non ionique suivant un procédé bien connu de l'homme de métier et décrit en détail dans la littérature (voir par exemple les brevets **FR-A-2 697 021, FR-A-2 064 563, FR-A-2 094 322, FR-A-2 114 230 et EP-A-0 169 098**).

Selon ce procédé, on mélange par simple agitation les polymères $\alpha,\omega$-(dihydroxy)polydiorganosiloxanes avec l'agent tensioactif ionique ou non ionique, ce dernier pouvant être en solution aqueuse. On ajoute ensuite de l'eau et on transforme l'ensemble en une émulsion fine (e.g. de granulométrie moyenne inférieure ou égale à 5 $\mu$m) et homogène à l'aide d'un mélangeur adéquat.

Par la suite le broyat obtenu est dilué par une quantité d'eau appropriée et on obtient ainsi une émulsion stabilisée par un agent tensioactif anionique ou non ionique stable au stockage.

S'agissant de **l'agent tensioactif (B)** de la dispersion suivant l'invention, il est de préférence non ionique. Ces agents tensioactifs non ioniques sont bien entendu les mêmes que ceux que l'on peut ajouter éventuellement aux émulsions (**A**) obtenues par polymérisation en émulsion comme indiqué plus haut.

Dans le cadre de la présente invention des agents tensioactifs anioniques peuvent éventuellement être employés. A titre d'exemples, on peut citer les sels des métaux alcalins des acides hydrocarbonés aromatiques sulfoniques ou alkylsulfuriques et les agents tensioactifs non ioniques préférés sont les alkylphénols polyoxyéthylénés ou les alcools gras éthoxylés.

La quantité de tensioactif utilisable est celle couramment mise en oeuvre pour la mise en émulsion telle que décrite en particulier dans les brevets précités et dans le brevet **US-A-2 891 920**.

Les tensioactifs non ioniques (de préférence), ioniques ou amphotères, peuvent être employés seuls ou en mélange entre eux.

Selon une disposition avantageuse de l'invention, la dispersion comprend au moins un agent de réticulation qui peut être formé :

- par la résine silicone (**C**) aminoalkylée, éventuellement salifiée, cette dernière comprenant à cette fin des molécules ayant au moins trois groupements $OR^3$ par molécule, ce qui correspond à $w + y \leq 2$ dans (**I**)
- et/ou par la résine silicone hydroxylée (**D**) apte à réagir avec les groupements $OR^a$ de (**A**),
- et/ou par l'alcoxysilane (**E**) apte à réagir avec les groupements $OR^a$ de (**A**).

En effet, il est parfaitement envisageable que les fonctions réactives de réticulation aptes à réagir avec l'huile polydiorganosiloxane (**A**) à extrémité réactive pour former des réseaux de réticulation, appartiennent à l'un des constituants (**C**), (**D**) ou (**E**) de la dispersion selon l'invention ou à un mélange d'entre eux.

Selon une alternative, le polydiorganosiloxane (**A**) se comporte comme un agent de réticulation comprenant, par molécule, au moins trois fonctions réactives de réticulation : $OR^8$ avec $R^8$ = H ou $R^a$.

**Le composé aminé et silicié** (**C**) (e.g. sous forme de résine), éventuellement salifié et tel que défini supra notamment dans ses trois modes de réalisation, constitue un autre objet de la présente invention, aussi bien en tant que produit nouveau *per se,* qu'en tant qu'additif actif pour compositions silicones réticulables et/ou réticulées. Ce nouvel additif est en définitive, un promoteur d'adhérence original pour silicones, ledit promoteur étant susceptible de posséder en outre, une fonction d'agent de réticulation, comme cela a été décrit ci-dessus.

La synthèse de cette résine silicone (**C**) aminoalkylée s'effectue, e.g., par réarrangement ou redistribution, par exemple en milieu alcalin et alcoolique, d'un polyorganosiloxane avec un alcoxysilane porteur de la ou des fonctionnalités aminées **(cf. US-A-4 757 106**).

Le polyorganosiloxane alcoxylé de départ peut être obtenu, de manière connue en soi en faisant réagir des halogénoalkylsilanes entre eux (par exemple cohydroalcoolyse de méthyl et de propyl chlorosilanes).

En pratique, le milieu réactionnel de synthèse de (**C**) est aqueux. Il comprend de l'alcool par exemple le méthanol, associé à une base telle que la potasse. La synthèse par redistribution est avantageusement réalisée à chaud (e.g. $\geq$ 50 °C) sous agitation pendant quelques minutes à plusieurs heures.

Dans le cas où la résine (**C**) n'est pas destinée à être salifiée ultérieurement le pH du milieu de redistribution

peut varier de 4 à 13.

La salification éventuelle des fonctions amines de la résine (**C**) est réalisée de préférence après greffage desdites fonctions sur la résine polyorganosiloxane alcoxylée (**C**). Cette salification consiste à faire réagir l'amine par exemple avec un acide du type acétique et/ou HCl en milieu éthanolique (e.g éthanol). De même que pour la redistribution, il est préférable de fournir de l'énergie thermique au milieu réactionnel de manière à améliorer les cinétiques (50 à 200 °C pendant quelques heures).

Naturellement, on ne peut exclure la variante méthodologique selon laquelle la salification s'effectuerait avant greffage du radical aminofonctionnalisé sur la résine (**C**). Cela ne requiert que quelques adaptations techniques à la portée de l'homme du métier. Selon une autre variante de salification, il est envisageable de faire en sorte que cette dernière s'effectue in situ dans la dispersion, e.g. lors de la formulation du mastic.

Dans le même ordre d'idées, on pourrait envisager une synthèse in situ de la résine silicone C aminoalkylée. Pour ce faire, il conviendrait d'incorporer dans la dispersion aqueuse de l'invention, la résine polyorganosiloxane alcoxylée et le silane porteur du greffon aminoalkylé ainsi que les réactifs nécessaires à la redistribution. On pourrait même imaginer une solution encore plus amont en incluant les précurseurs de la résine polyorganosiloxane alcoxylé, à savoir les halogénosilanes.

Ces considérations méthodologiques sur la préparation de (**C**) sont générales et valent quel que soit le type de composé aminé et silicié :

résine DTT (N) $OR^3$
résine DQT (N) $OR^3$
résine DTD (N) $OR^3$

Il est à noter que dans le cas où cette résine (**C**) est salifiée, il est généralement nécessaire de préacidifier la dispersion, e.g. le mastic, avant d'y incorporer la résine (**C**).

**La résine silicone hydroxylée et/ou alcoxylée** (**D**) possède une teneur pondérale en groupes hydroxyles et/ou alcoxyles, comprise entre 0,1 et 10 % de préférence entre 0,4 et 4 %. Cette résine (**D**) présente, par molécule, au moins deux motifs différents choisis parmi ceux de formule M, D, T et Q.

Comme exemple de substituant organique de ces motifs, on peut citer les radicaux méthyle, éthyle, isopropyle, tertiobutyle, n-hexyle et phényle.

Ces résines silicones sont des polymères organopolysiloxanes ramifiés bien connus, dont les procédés de préparation sont décrits dans de très nombreux brevets.

Comme exemples de résines utilisables, on peut citer les résines MQ, les résines MDQ, les résines TD et les résines MDT.

On peut utiliser les résines qui sont solides ou liquides à température ambiante. Ces résines peuvent être incorporées dans les émulsions aqueuses telles quelles, en solution dans un solvant organique ou une huile silicone, ou bien sous forme d'émulsions aqueuses.

Des émulsions aqueuses de résines silicones utilisables sont, par exemple, décrites dans les brevets **US-A-4 028 339, US-A-4 052 331, US-A-4 056 492, US-A-4 525 502** et **US-A-4 717 599** cités comme référence.

Comme indiqué supra, cette résine (**D**) facultative peut faire fonction d'agent de réticulation grâce à ses fonctions hydroxyles et/ou alcoxyles, aptes à réagir par condensation avec les $OR^a$ de l'huile silicone (**A**).
L'alcoxysilane (**E**) peut jouer le même rôle réticulant que (**D**). Mais il ne peut réagir avec l'huile silicone (**A**) qu'à la condition qu'une hydrolyse préalable des fonctions $OR^a$ se soit produite. Un tel mécanisme de réticulation par condensation est particulièrement adapté pour les formulations ou les systèmes monocomposants.

A titre d'exemples d'alcoxysilane (**E**), on peut citer : $ViSi(OEt)_3$, $ViSi(OMe)_3$, $Si(OEt)_4$, $MeSi(OMe)_3$, $Si(OMe)_4$
$Me = CH_3$ $Et = CH_3CH_2$.

La présente invention vise notamment les dispersions comprenant au moins un catalyseur (**F**). Ainsi **les composés catalytiques métalliques de durcissement** (**F**) sont essentiellement les sels d'acides carboxyliques et les halogénures de métaux choisis parmi le plomb, le zinc, le zirconium, le titane, le fer, l'étain (Sn II, Sn IV), le baryum, le calcium et le manganèse.

Le constituant (**F**) est de préférence un composé catalytique à l'étain, généralement un sel d'organoétain, introduit de préférence sous forme d'une émulsion aqueuse. Les sels d'organoétain utilisables sont décrits, en particulier dans l'ouvrage de NOLL, Chemistry and Technology of Silicones Academic Press (1968), page 337.

On peut également utiliser comme composé catalytique à l'étain le produit de réaction d'un sel d'étain, en particulier d'un dicarboxylate d'étain sur du polysilicate d'éthyle, comme décrit dans le brevet **US-A-3 862 919.**

Le produit de réaction d'un silicate d'alkyle ou d'un alkyltrialcoxysilane sur le diacétate de dibutylétain comme décrit dans le brevet belge **BE-A-842 305**, peut convenir aussi.

Selon une autre possibilité, on a recours à un sel d'étain II, tel que $SnCl_2$ ou l'octoate stanneux.

Les sels d'étain préférés sont les bischélates d'étain **(EP-A-0 147 323** et **EP-A-0 235 049**), les dicarboxylates

de diorganoétain et en particulier les diversatates de dibutyl-ou de dioctylétain (brevet britannique **GB-A-1 289 900**), le diacétate de dibutyl-ou de dioctylétain, le dilaurate de dibutyl-ou de dioctylétain. On utilise de 0,01 à 3, de préférence de 0,05 à 2 parties de sel d'organoétain pour 100 parties de (**A**).

Selon des variantes, on peut également utiliser comme catalyseur (**F**) des acides ou bases fortes (KOH, NaOH) ou des amines (éventuellement l'amine de la résine (**C**)).

Un autre constituant de la dispersion selon l'invention est une charge (**G**) qui est présente à raison de 0 à 250, de préférence de 5 à 200 parties et qui est de type ($\mathbf{G_1}$) minérale non siliceuse semi-renforçante ou de bourrage et/ou de type ($\mathbf{G_2}$) siliceuse renforçante ou semi-renforçante.

Les charges non siliceuses ($\mathbf{G_1}$) ont une granulométrie généralement comprise entre 1 et 300 µm et une surface BET inférieure à 50 $m^2$ / g.

Des exemples de charges ($\mathbf{G_1}$) utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte.

Ces charges ($\mathbf{G_1}$) sont introduites dans l'émulsion sous forme de poudre sèche, par exemple, par simple mélange.

Selon une variante de l'invention, on a découvert que si la charge ($\mathbf{G_1}$) n'est sensiblement constituée que d'une charge choisie parmi l'alumine hydratée, la vermiculite expansée, la vermiculite non expansée, selon une teneur de 5 à 250, de préférence de 50 à 200 parties pour 100 parties de (**A**), on obtient un élastomère ayant une résistance à la flamme particulièrement élevée, qui ne peut pas être obtenue avec les autres catégories de charge ($\mathbf{G_1}$) précitées, en particulier avec l'oxyde d'aluminium ou alumine non hydratée. On peut également incorporer des fibres céramiques ou d'aramide selon l'enseignement de **EP-A-0 212 827.**

Les charges siliceuses ($\mathbf{G_2}$) sont choisies parmi la silice colloïdale, les poudres de silice de combustion et de précipitation ou leurs mélanges. La silice de combustion est préférée. On peut toutefois utiliser également des charges silicieuses semi-renforçantes telles que des terres de diatomées, du quartz broyé.

Les poudres de silice de combustion et de précipitation sont bien connues, elles sont utilisées en particulier comme charges dans les compositions élastomère de silicone, vulcanisables à chaud en un caoutchouc de silicone. Ces poudres présentent une taille moyenne de particules généralement inférieures à 0,1 µm et une surface spécifique BET supérieure à 50 $m^2$/g, de préférence comprise entre 150 et 350 $m^2$/g.

Selon une variante, on peut incorporer en outre, pour 100 parties d'huile (**A**) (émulsion), un additif silicié (**H**) formé par du silicate de soude (0,3 à 30 parties), ou un organosiliconate.

L'incorporation dans la dispersion de ($\mathbf{G_1}$) et/ou ($\mathbf{G_2}$) augmente considérablement le viscosité de celle-ci, qui présente alors un caractère pâteux.

On a en effet trouvé, conformément à la présente invention que l'addition de ($\mathbf{G_1}$) et/ou ($\mathbf{G_2}$), est suffisante pour conférer à la dispersion un caractère "thixotrope" plus ou moins marqué. La dispersion extraite, par exemple d'une cartouche de stockage, adhère sans s'écouler sur un substrat même vertical et durcit en élastomère par évaporation de l'eau à température ambiante. On peut obtenir une dispersion non coulante en utilisant comme charge (**G**) du carbonate de calcium dont le diamètre particulaire moyen est inférieur à 0,1 µm. Bien entendu, un léger chauffage (à 40-80 °C environ) de la dispersion pour accélérer l'évaporation de l'eau n'est pas exclu du cadre de l'invention.

Aux dispersions conformes à la présente invention, peuvent être ajoutés divers additifs permettant de modifier leurs propriétés et celles des élastomères formés à partir desdites dispersions par élimination d'eau. On peut incorporer en plus de (**C**) d'autres promoteurs d'adhérence (**I**), de préférence des organotrialcoxysilanes, comme par exemple le vinyltriméthoxysilane, les silicates d'alkyle tels que le silicate de méthyle ou le silicate d'éthyle ou leurs produits d'hydrolyse partielle, c'est-à-dire les polysilicates d'alkyle, tels que le polysilicate de méthyle et le polysilicate d'éthyle à une teneur de 0,1 à 20 parties d'agent d'adhérence pour 100 parties de (**A**).

Les organotrialcoxysilanes et les silicates d'alkyle répondent de préférence à la formule générale :

$$R^{10}{}_{p}Si(OR^{11})_{4-p}$$

dans laquelle R est un radical alkyle ayant de 1 à 4 atomes, $R^{11}$ est $R^{10}$ ou vinyle et p est 1 ou 0.

Comme autres exemples d'additifs on peut citer les antifongiques, les antimousses ainsi que les agents épaississants comme la carboxyméthylcellulose, la gomme xanthane et l'alcool polyvinylique, ou des agents dispersants tels que les polyacrylates de sodium ou l'hexamétaphosphate de sodium.

Selon une modalité préférée de l'invention, la dispersion aqueuse silicone réticulable en un élastomère adhérent, est une émulsion huile dans eau chargée, dont l'extrait sec est supérieur ou égal à 40 % poids, de préférence à 80 % poids et plus préférentiellement encore compris entre 80 % et 95 % en poids.

**APPLICATION INDUSTRIELLE :**

Les dispersions selon l'invention conviennent plus particulièrement dans l'industrie du bâtiment, à la réalisation de mastics, de calfatage et matériaux d'étanchéité tels que des joints ou bien encore pour préparer des films, revêtements ou autres couches minces.

L'invention a également pour objet tous les produits finis dont notamment les mastics, matériaux d'étanchéification ou films (revêtements) adhérents comprenant la dispersion et/ou l'élastomère réticulé obtenu à partir de cette dispersion.

Les dispersions selon l'invention peuvent être préparées au moins selon deux méthodologies différentes selon le mode de réalisation envisagé, à savoir :

-1- La résine silicone (**C**), amino-fonctionnalisée et salifiée, est introduite dans la phase continue aqueuse.

-2- La résine silicone (**C**) amino fonctionnalisée et non salifiée, est introduite dans la phase dispersée huileuse silicone.

Il est à noter que ces deux modes ne sont pas exclusifs d'un troisième, dans lequel on aurait de la résine (**C**) salifiée dans la phase silicone dispersée.

***Cas 1:***

On prépare tout d'abord une émulsion en mélangeant l'huile silicone polyorganosiloxane à extrémités réactives, incluant éventuellement un agent réticulant (résine silicone hydroxylée (**D**) et/ou alcoxysilane (**E**)), le tensioactif (**B**) ionique, amphotère ou non ionique de préférence non ionique, éventuellement au moins une partie de la charge (**G**) éventuellement au moins une partie du catalyseur (**F**).

Selon une alternative, le polydiorganosiloxane (**A**) peut avoir été obtenu par polymérisation en émulsion et être mis en oeuvre sous cette forme pour la préparation de la dispersion.

L'eau est présente en quantité optimale et le malaxage de ce mélange est effectué jusqu'à l'obtention d'une émulsion fine silicone / eau, ayant des particules huileuse de taille moyenne de préférence inférieure à 5 µm.

Le pH de l'émulsion a été éventuellement ajusté à une valeur convenable pour prévenir la libération de l'amine de la résine silicone salifiée (**C**) aminofonctionnelle et la précipitation de cette dernière lors de son incorporation dans le mélange.

Pour poursuivre la préparation de la dispersion qui correspondra à la forme d'application recherchée, (mastic, joint, matériau d'étanchéité, matériau pour la réalisation de films ou de revêtements), on incorpore la résine silicone aminofonctionnalisée salifiée (**C**), le catalyseur (**F**) s'il n'a pas déjà été introduit en totalité et le reste des éventuels autres composants de la dispersion (**D**), (**E**) ou (**G**). Des opérations de malaxage sont nécessaires pour assurer l'homogénéisation du mélange.

***Cas 2 :***

Dans ce cas, on mélange l'huile silicone visqueuse (**A**) avec la résine silicone (**C**) aminofonctionnalisée non salifiée, de l'agent de réticulation si la résine (**C**) ne possède pas de fonctionnalité réticulante et éventuellement un autre type d'agent réticulant si elle en possède. (résine hydroxylée (**D**) et/ou alcoxysilane (**E**), éventuellement une charge (**G**) et éventuellement un catalyseur de condensation (**F**) par exemple du type LiOH ou organométallique.

L'émulsification du mélange ci-dessus s'opère ensuite à l'aide de tensioactifs ioniques ou non de préférence non ionique, éventuellement en mélange, en présence d'une quantité optimale d'eau. On procède alors au malaxage de ce mélange jusqu'à l'obtention d'une émulsion fine silicone dans eau ayant des particules d'huile de taille préférence inférieure ou égale à 5 µ.

Des composés cités ci-dessus ou d'autres additifs peuvent éventuellement être ajoutés après émulsification.

D'une manière générale pour les cas 1 et 2 ci-dessus, l'extrait sec de l'émulsion est choisi en fonction de l'application finale visée. Pour le mastic par exemple, on ajuste l'extrait sec à une valeur de préférence supérieure ou égale à 80 % en poids.

Les protocoles de préparation donnés ci-dessus pour les cas 1 et 2 sont des protocoles méthodologiques recommandés mais non limitatifs.

Pour l'application matériau pour la formation de revêtements ou de films ou pour une utilisation comme peinture réticulable en couche mince, les dispersions selon l'invention ont de préférence un extrait sec compris entre 40 et 70 % en poids.

Les préparations décrites ci-dessus correspondent à l'obtention d'un système précurseur de la forme réticulée de la dispersion de l'invention, ledit précurseur se présentant sous forme monocomposant réticulable par élimination

d'eau, par exemple grâce au séchage résultant d'une mise dans des conditions ambiantes.

Le système précurseur préféré selon l'invention est du type monocomposant.

Mais il peut également être pluricomposants, par exemple bicomposants, réticulables par mélange des composants juste avant l'application.

Un système bicomposant est formé par deux parties P1, P2 distinctes, destinées à être mélangées pour former la dispersion, l'une de ces parties P1, P2 contenant l'huile (**A**) et l'autre l'agent réticulant, le catalyseur (**F**) étant éventuellement présent dans l'une seulement des parties P1, P2.

Ces systèmes précurseurs constituent d'autres objets s'insérant parfaitement dans le cadre de la présente invention.

Les dispersions selon l'invention présentées ci-dessus, présentent le grand avantage d'être stables aisément manipulables et utilisables et de conduire à des élastomères réticulés doués d'excellentes propriétés mécaniques : dureté, résistance à la rupture, allongement à la rupture, module d'élasticité, résilience.... et ce, aussi bien juste après leur obtention qu'après vieillissement.

Par ailleurs, ces élastomères réticulés ont à leur crédit un faible coût de revient, une bonne résistance à la flamme, une thixotropie satisfaisante et un temps court de réticulation. Enfin, et surtout ces élastomères réticulés ont pour qualité majeure leur bonne adhérence sur les supports usuels tels que le verre, le bois, les métaux ou autres matériaux céramiques.

Cela offre de nombreux débouchés à l'invention dans le domaine des mastics, matériaux d'étanchéification, matériaux pour former des revêtements en couches minces, des films (peintures), entre autres.

Les exemples qui suivent permettront de mieux comprendre l'invention et d'en saisir tous ses avantages ainsi que ses variantes de réalisation.

**EXEMPLES**

**Exemple I : Préparation de la résine silicone (C) aminofonctionnalisée, et salifiée ou non :**

Il s'agit d'une résine DTT(N)(OMe) redistribuée avec l'aminoéthylaminopropyltriméthoxysilane en présence de potasse éthanolique, neutralisée par une solution aqueuse d'acide chlorhydrique, puis en salifiant éventuellement les fonctions amines par l'acide acétique.

*Matières premières*

* Résine notée DTOR et obtenue par cohydrométhanolyse de chlorosilanes comme suit :

  Dans un réacteur de 25 litres on charge 32,62 moles de diméthyldichlorosilane et 32,62 moles de propyltrichlorosilane. On coule un mélange méthanol eau soit 195,6 moles de méthanol et 21,77 moles d'eau en 3 heures et quinze minutes sous agitation. On maintient la température à 25 °C. On porte à ébullition en fin de coulée et on maintient pendant 4 heures et trente minutes. On laisse ensuite décanter une heure et on élimine la phase supérieure, ce qui représente environ 6 % de la résine. On élimine les chlores résiduels en rajoutant du méthanol, successivement 1,7 ; 1,5 et 1,5 kg éliminé par distillation. On neutralise au bicarbonate de sodium 0,23 kg une demi heure à 40 °C. On obtient 4,9 kg et 4,4 kg après filtration.

  Cette résine à une viscosité η à 25 °C = 27, 9 mPa.s et l'analyse RMN29Si révèle la distribution ci-après des différents motifs :

| MOTIFS | % MOLAIRE |
|---|---|
| D (OMe) | 0,27 |
| D(OMe)$^2$ | 8,37 |
| D | 39,34 |
| T(OMe)$_3$ | 0,20 |
| T(OMe)$_2$ | 6,56 |
| T(OMe) | 28,80 |
| T | 25,10 |
| MeOSi / Si = 0,51 mol/mol | |

  Quantité mise en oeuvre : 2 728 g soit 7,37 moles.

- * Silane aminé du type N-(2-aminoéthyl-3-aminopropyl)triméthoxysilane de formule : $(Me0)_3 Si(CH_2)_3 NH(CH_2)_2NH_2$
  Quantité mise en oeuvre : 1 004 g soit 4,51 mole.
- * Potasse éthanolique KOH-EtOH 0,5 N.
  Quantité mise en oeuvre : 20,5 mmoles KOH.
- * Acide chlorhydrique HCl 10 % dans $H_2O$
  Quantité mise en oeuvre : 41 mmoles.

*Mode opératoire*

-1- Chargement :

Dans un réacteur de 5 litres, on mélange la résine DTOR et le silane aminé. On agite pendant 30 min, puis on ajoute la potasse éthanolique progressivement.

-2- Chauffage:

Chauffage 6 heures à 100 °C environ, sous agitation.

-3- Neutralisation avec l'HCl vers 50 °C.

Au terme de cette étape 3, on obtient 3 732 g de résine d'une viscosité η à 25 °C = 48 mPa.s, ci-après dénommée **Res 1**. Cette **Res 1** est caractérisée par $RMN^{29}$ Si. On obtient la distribution suivante :

| MOTIFS | % MOLAIRE |
|---|---|
| $D(OMe)_2$ | 3,6 |
| D (OMe) | 15,2 |
| D | 14,3 |
| $T (OMe)_3 + T (N) (OMe)_3$ | 1,2 |
| $T (OMe)_2 + T (N) (OMe)_2$ | 12,2 |
| T (OMe) + T(N) (OMe) | 31,2 |
| T+T(N) | 22,3 |

Pour une formule (**I**) de (**C**) :

$$R^1_x R^2_y (OR^3)_z Si\, O_{\frac{4-(x+y+z)}{2}}$$

cela correspond à :

- x + y = 1,33
- z = 0,82 (MeOSi / Si en mol / mol)

De plus,

$$\frac{D}{D+T} = 33{,}1\%$$

Enfin, le pourcentage massique de N 14 de **Res 1** = 2,9 %.

- 4 - Salification

Dans un ballon tricol de capacité 1000 ml on ajoute 364 g, de **Res 2** décrite précédemment. Sous agitation on coule en 1 heure, sous agitation et sous air un mélange contenant 57,6 g d'acide acétique pur et 105 g d'éthanol.

La température de la masse liquide atteint 30 °C en fin de coulée. On chauffe ensuite le mélange réactionnel 3 heures à 90 °C. On revient ensuite à température ambiante. La nouvelle résine obtenue **Res 2** est dispersable dans l'eau.

L'analyse par R.M.N du silicium a été effectuée pour caractériser la résine :

**Res 2**

| MOTIFS | % MOLAIRE |
|---|---|
| D $(OMe)_2$ | 1 % |
| D (OMe) | 12,3 % |
| D | 19,1 % |
| T $(OMe)_3$ + T(N) $(OMe)_3$ | 0,4 % |
| T $(OMe)_2$ + T(N) $(OMe)_2$ | 9,5 % |
| T (OMe) + T(N) (OMe) | 31,3 % |
| T + T (N) | 26,4 % |

- x + y = 1,32
- z = 0,66 (MeOSi/Si mmol/mol)
- D/D+T=32,4%
- $^{14}N$ = 2,9%

- 5 - On prépare également une résine **Res 3** aminosalifiée se distinguant de **Res 2** en ce qu'elle titre 2,55 % d'Azote 14.

**Exemple II : Obtention de dispersions selon l'invention se présentant sous forme de mastics**

*II.1 Préparation de l'émulsion : Formulations des essais types 1 à 9*

- introduction dans un malaxeur à bras **"MEILI"** ou **"KUSTNER"** de 100 g d'huile (**A**) silicone α,ω-dihydroxylée de viscosité = 80 000 mPa.s, de Mw = env, 120 000 et titrant env. 300 ppm d'OH en poids) puis (sauf dans les exemples 8 et 9) de 10 g résine hydroxylée (**D**) ayant 2,2 % en poids de groupe hydroxyle et constituée de 70 % en poids de motifs $CH_3$ Si $O_{1,5}$ et de 30 % en poids de motifs $(CH_3)_2$ SiO. Le malaxage est effectué pendant 15 min.

  On utilise soit une résine (**D'**) qui est celle contenant 2,2 % en poids d'OH soit une résine (**D**") contenant 0,4 % en poids d'OH et constituée de motifs MDT.
- addition sous agitation de 5 g de tensioactif (**B**).

  On utilise soit le CEMULSOL® NP9 (nonylphénol à 9 OE) de RHONE POULENC à titre de tensioactif (**B**') soit le RHODASURF IT 70® de RHONE POULENC à titre de tensioactif (**B**").
- addition sous agitation de 5 g d'eau, puis malaxage pendant 30 min
- coulée en 15 min et sous agitation de 100 g d'huile (**A**)
- malaxage pendant 75 min ; l'émulsion concentrée obtenue présente une granulométrie moyenne de 0,81 µ et une médiane de 0,66 µ (mesures faites au COULTER LS® 130).

*II.2 Préparation du mastic Formulation des essais type 1 à 9*

- à 110 g de l'émulsion concentrée précédente addition sous agitation de 25 g d'eau de dilution - déminéralisée puis de 0,12 g d'acide acétique (en 20 minutes).
- ajout de la charge (**G**) [(**G**') = carbonate SOCAL 31® de SOLVAY (**G**") = silice FK 160® de DEGUSSA ou SIFRACO®

C600] puis malaxage pendant 30 min ;

- coulée sous agitation de l'émulsion catalysante (**F**) comprenant 37 % en poids de dilaurate de di-octyl étain du type 70827 A (1,3 g) de RHONE POULENC en 15 min ; le pH est égal à 4.
- introduction de la résine DTOR aminée salifiée - liquide (2 g) [**Res 2** ou **Res 3**] et malaxage pendant 20 min
- débullage du mastic sous vide léger et sous agitation modérée
- vidange et conditionnement du mastic en cartouche étanche en polyéthylène.

Toute l'opération est réalisée à froid, avec un faible débit d'eau dans la double enveloppe du malaxeur.

**Exemple III : Evaluations**

*III. 1 Propriétés mécaniques initiales*

24 heures après préparation du mastic, la dispersion est étalée avec une râcle calibrée pour réaliser une pellicule (film) de 2 mm d'épaisseur qu'on laisse sécher pendant 10 jours avant de mesurer les propriétés mécaniques suivantes :

- la dureté Shore A (DUR) selon la norme ASTM-D-2240
- la résistance à la rupture (R/R) selon la norme AFNOR-T 46 002 correspondant à ASTM-D 412, en Mpa,
- l'allongement à la rupture (A/R) en % selon AFNOR - T 46 002,
- le module élastique Mod 100 à 100 % d'allongement selon la norme AFNOR-T 46 002, en MPa.

*III. 2 Propriétés mécaniques après vieillissement accéléré*

Les mesures mécaniques précédentes sont refaites sur un mastic stocké en cartouche étanche pendant 14 jours à 50°C.

*III. 3 Adhérence*

MESURE QUALITATIVE : 24 heures après préparation du mastic celui-ci est déposé sous forme d'un cordon de 3 mm d'épaisseur sur un support en verre clair et sur béton. Après séchage de ces éprouvettes pendant 14 jours, le niveau d'adhérence est évalué en créant avec une lame de cutter une amorce de rupture à l'interface entre le mastic sec et le support, puis en cherchant à propager cette rupture par pelage. L'adhérence est considérée :

- excellente (notée +++) lorsque le cordon ne peut être décollé de son support (rupture cohésive)
- bonne (notée ++) lorsque le cordon est décollé difficilement et par petites surfaces
- médiocre (noté +) lorsque le cordon se décolle assez facilement, même s'il reste en périphérie quelques points d'ancrage.
- nulle (notée 0) lorsque le cordon se décolle sans difficulté, avec une rupture parfaitement adhésive.

MESURE QUANTITATIVE : (sur l'essai N° 4 uniquement)

Une éprouvette de collage est constituée en emprisonnant un parallélépipède de mastic (12 x 6 x 50 mm) entre 2 éprouvettes en verre ou en béton (interface mastic/ support = 50 X 6 mm) et des cales antiadhérentes en téflon. Une interface mastic/air de 50 X 12 mm est laissée libre de manière à autoriser le séchage du mastic:

La durée totale de séchage est de 28 jours, mais les cales sont retirées de l'assemblage après quelques jours de manière à faciliter le séchage. L'éprouvette séchée 28 jours est étirée au dynamomètre, la courbe de traction ainsi obtenue permettant de déterminer l'allongement et la force (ou module) correspondant à la rupture du complexe (sandwich) support/mastic/support. On examine le mode de rupture, qui peut être adhésif (à l'interface mastic/support) ou cohésif (au sein du mastic). Les courbes de traction en fonction du % d'allongement [(**Fig. 1 et Fig. 2**) = obtenues respectivement pour des supports en béton et en verre], sont fournies en annexe.

Le protocole de mesure d'adhérence ici mis en oeuvre, correspond à la Norme ISO NF EN 28339, sauf en ce qui concerne la taille de parallélépipède ; 12 x 6 x 50 mm au lieu de 12 x 12 x 50 mm.

**Exemple IV : Compositions et résultats**

Ces données sont rassemblées dans le tableau récapitulatif ci-après.

**Essai 1** comparatif réalisé avec du Carbonate de Calcium et à pH neutre gélifie en présence de la résine

silicone aminée salifiée lors du stockage du mastic en cartouche ; il est nécessaire de travailler avec des charges acides (silices) et à pH légèrement acide.

**Essai témoin 2** sans résine DT T(N) (OMe) aminée. Cette formulation est non adhérente sur verre et instable (gélification au test de vieillissement).

**Essai 3** réalisé en remplaçant la résine **Res 2** par l'aminoéthylaminopropyltriméthoxysilane montre qu'à la même teneur totale en azote dans le mastic, on ne retrouve pas l'adhérence obtenue dans le cas de l'essai 4.

**Essai 4** contenant 2 phr (parties en poids pour 100 parties d'huile) de résine silicone DTT(N)(OMe) aminée salifiée référencée **Res 2.**

**Essai 5** confirme les résultats de l'essai 4 dans le cas où on a remplacé la silice (**G**") (silice précipitée de DEGUSSA) par la charge (**G**"') quartz broyé (SIFRACO C600) et la résine DTT(N)OMe aminée salifiée **Res 2** par une résine similaire **Res 3** légèrement plus pauvre en azote.

**Essai 6** : essai réalisé avec le tensioactif(**B**") = (RHODASURF IT 070 de RHONE POULENC, alcool isotridécylique polyoxyéthyléné à 7 OE à la place de (**B**)) et avec la résine (**D**") = Résine de RHONE POULENC à 5000 ppm d'OH en poids, au lieu de la résine (**D**') de RHONE POULENC, à 20000 ppm d'OH.

**Essai 7 :** essai réalisé en doublant le taux de tensioactif

**Essais 8 et 9 :** Essais réalisés en absence de résine silicone hydroxylée dans la phase dispersée silicone, la résine silicone DT T(N) (OMe) aminée salifiée **(Res 2)** dispersée dans la phase continue aqueuse jouant ici le double rôle d'agent de réticulation et de promoteur d'adhérence. On note que pour l'essai 8 contrairement aux autres essais l'adhérence est conservée après vieillissement accéléré du mastic en cartouche (pendant 14 jours à 50 °C).

## TABLEAU RECAPITULATIF

| ESSAIS | 1 | 2 | 3 | 4 | 5 | 6 | 7 | 8 | 9 |
|---|---|---|---|---|---|---|---|---|---|
| Nature tensioactif | B' | B' | B' | B' | B' | B" | B" | B" | B" |
| Quantité TA | 2,5 | 2,5 | 2,5 | 2,5 | 2,5 | 2,5 | 5 | 2,5 | 2,5 |
| Résine (D) (5 phr) | D' | D' | D' | D' | D | D" | D" | | |
| Charge :<br>quantité phr | G'<br>20 | G"<br>5 | G"<br>5 | G"<br>5 | G'"<br>40 | G'"<br>40 | G'"<br>40 | G"<br>5 | G'"<br>40 |
| pH :<br>(ajusté $CH_3COOH$) | 7 | 4,5 | 4,5 | 4 | 4,5 | 4,5 | 4,5 | 5,5 | 5 |
| Promoteur adhérence (Phr) | Res 2 | | aminopropyltri méthoxysilane | Res 2 | Res 3 | Res 3 | Res 3 | Res 2 | Res 3 |
| Commentaires | Prise dans la cartouche | Instabilité liée à la silice | N'adhère pas | | | | | adhère après vieillissement à 50° C | instable |
| Adhérence béton<br>verre | ++ | 0<br>0 | +++<br>0 | +++<br>++ | +++<br>++ | +++<br>+ | +++<br>+ | +++<br>+++ | +++<br>+++ |
| P. Mécaniques Initiales<br>. Dureté (Sh.A)<br>. Résistance/Rupture (MPa)<br>Allongement/Rupture (%)<br>. Mod100 (MPa) | | 8,5<br>0,59<br>486<br>0,19 | 13<br>0,56<br>257<br>0,27 | 17<br>0,61<br>214<br>0,37 | 20<br>0,91<br>254<br>0,42 | 16<br>0,6<br>234<br>0,31 | 16<br>0,68<br>278<br>0,33 | 6<br>0,53<br>532<br>0,14 | 8<br>0,45<br>530<br>0,19 |
| P. Mécaniques après 14 jours 50° C<br>. Dureté (ShA)<br>. Résistance/Rupture (MPa)<br>. Allongement/Rupture (%)<br>. Mod100 (MPa) | | prise dans la cartouche | 18<br>0,75<br>215<br>0,39 | 23<br>0,92<br>161<br>0,58 | 30<br>1,75<br>187<br>1,02 | 25<br>1,57<br>230<br>0,68 | 25<br>1,7<br>238<br>0,69 | 19<br>0,71<br>178<br>0,51 | prise dans la cartouche |
| Adhérence béton<br>Adhérence verre | | | 0<br>0 | 0<br>0 | 0<br>0 | 0<br>0 | 0<br>0 | +<br>++ | |
| Extrusion initiale<br>après vieillissement | | | +++<br>++ | +++<br>++ | +<br>++ | +++ | +++<br>++ | +++<br>+ | |

## Revendications

1. Composé aminé et silicié formé de plusieurs unités récurrentes de formule moyenne (**I**) suivante :

$$(I)\ R^1_x R^2_y\ (OR^3)_z\ Si\ O_{\frac{4-(x+y+z)}{2}}$$

dans laquelle :

- $R^1$ représente un groupement monovalent exempt d'azote, de nature identique ou différente d'une unité récurrente à l'autre, et correspondant à l'hydrogène, un alkyle en $C_1$-$C_6$, un aryle ou un alcényle en $C_2$-$C_8$, éventuellement substitué, $R^2$ représente un groupement monovalent hydrocarboné, lié au silicium par une liaison Si-C et contenant au moins un atome d'azote et ;
- $R^2$ étant de nature identique ou différente d'une unité récurrente à l'autre ;
- $R^3$ est un groupement hydrocarboné comprenant de 1 à 18 atomes de carbone et ;
- x, y et z sont des nombres entiers ou décimaux positifs inférieurs à 4 ;
- et $x+y+z <4$ ;

**caractérisé en ce qu'**il est constitué par des unités récurrentes (**I**) alcoxylées formant une résine présentant une fonctionnalité moyenne en Silicium supérieure à 2, ce qui correspond, dans la formule (**I**) à $x + y < 2$, sachant que, par ailleurs :

$1 \leq x \leq 1{,}8$;
$0{,}1 \leq y \leq 0{,}8$;
$0{,}4 \leq z \leq 1{,}0$;

2. Composé selon la revendication 1 **caractérisé en ce que** $R^1$ et $R^3$ sont plus particulièrement sélectionnés dans le groupe comprenant : H, allyle en $C_1$ - $C_4$ éventuellement halogéné.

3. Composé selon la revendication 2 **caractérisé en ce que** $R^1$, $R^3$ est un groupement méthyle, éthyle, propyle, trifluoro-3,3,3-propyle, vinyle, allyle ou phényle.

4. Composé selon l'une quelconque des revendications 1 à 3, **caractérisé en ce qu'**il comprend un polyorganosiloxane formé par un copolymère- comprenant les motifs récurrents suivants: D T T (N) ($OR^3$) avec

motif D = $R^1_2$ Si $O_{2/2}$
motif T = $R^1$ Si $O_{3/2}$
motif T(N) = $R^2$ Si $O_{3/2}$

dans lesquels $R^1$, $R^2$, $R^3$ sont tels que définis dans la revendication 1 [Formule (**I**)] et les radicaux - $OR^3$ terminaux sont portés par D et/ou T et/ou T(N), et **en ce que** le ratio molaire D/D + T est inférieur ou égal à 50 %.

5. Composé selon l'une quelconque des revendications 1 à 3, **caractérisé: en ce qu'**il comprend un polyorganosiloxane formé par un copolymère comprenant les motifs récurrents suivants: D Q T (N) ($OR^3$) avec :

motif D = $R^1_2$ Si $O_{2/2}$
motif T(N) = $R^2$ Si $O_{3/2}$
motif Q = Si $O_{4/2}$

dans lesquels $R^1$, $R^2$, $R^3$ sont tels que définis dans la revendication 1 [Formule (1)] et les radicaux -OR3 terminaux sont portés par D et/ou T(N) **en ce que** le ratio molaire D/D + Q est inférieur ou égal à 70 %.

6. Composé selon l'une quelconque des revendications 1 à 3, **caractérisé: en ce qu'**il comprend un copolymère comprenant les motifs récurrents suivants: D T D (N) (OR3) avec

motif D = $R^1_2$ Si $O_{2/2}$
motif D(N) = $R^1$ $R^2$ Si $O_{2/2}$

motif T = $R^1$ Si $O_{3/2}$

dans lesquels $R^1$, $R^2$, $R^3$ sont tels que définis dans la revendication 1 [Formule (**I**)] et les radicaux - $OR^3$ terminaux sont portés par D et/ou T(N), et **en ce que** le ratio molaire D/D + T est inférieur ou égal à 100 %.

**7.** Composé selon l'une quelconque des revendications 1 à 6, **caractérisé en ce que** le radical $R^2$ de la formule (**I**) répond à la formule suivante :

$$(R^4)_2NR^5$$

dans laquelle :

- les groupements $R^4$ sont identiques ou différents et représentent l'hydrogène ou $-R^6-NH_2$,
- les groupements $R^5$, $R^6$ étant des radicaux alkylènes divalent en $C_1$-$C_{10}$, éventuellement substitués,
- ou bien encore les groupements $R^4$ sont différents de l'hydrogène et forment ensemble un cycle à 5 - 7 chaînons renfermant au moins un hétéroatome.

**8.** Composé selon l'une quelconque des revendications 1 à 7, **caractérisé en ce qu'**il est de structure du type résine, et **en ce qu'**il est salifié et comprend un ou des radicaux $R^2$ de formule suivante :

**(R2)** =
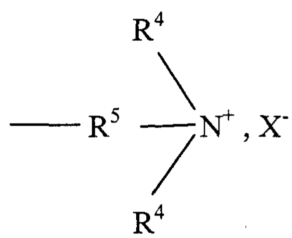

avec $R^4$ et $R^5$ tels que définis dans la revendication 7 et X représentant un contre-anion choisi parmi les carboxylates, les halogénures.

**9.** Composé selon la revendication 8 **caractérisé en ce que** X est un lactate, un acétate ou un chlorure.

**10.** Dispersion silicone aqueuse, réticulable en un élastomère par élimination d'eau et, éventuellement, d'alcool et/ou d'acide carboxylique, ladite dispersion comprenant :

- A - au moins un polydiorganosiloxane (**A**) présentant, par molécule, au moins deux groupements condensables ou hydrolysables $OR^a$ avec $R^a$ = H ou alkyle,
- B - au moins un tensioactif (**B**),
- C - au moins un composé aminé et silicié (**C**) tel que défini dans l'une quelconque des revendications 1 à 3

**caractérisée en ce que** le composé aminé et silicié (**C**) est sélectionné dans la famille de ses dérivés alcoxylés (z > O),
et **en ce que** ce composé aminé et silicié est constitué par plusieurs unités récurrentes (**I**) formant une résine présentant une fonctionnalité moyenne en Silicium supérieure à 2, ce qui correspond, dans la formule (**I**) à x + y < 2 ; sachant que, par ailleurs :

- $1 \leq x \leq 1{,}8$;
- $0{,}1 \leq y \leq 0{,}8$;
- $0{,}4 \leq z \leq 1{,}0$;

**11.** Dispersion selon la revendication 10, **caractérisée en ce que** le composé aminé et silicié est un polyorganosiloxane formé par un copolymère comprenant les motifs récurrents suivants : D T T (N) ($OR^3$) avec :

motif D = $R^1_2$ Si $O_{2/2}$
motif T = $R^1$ Si $O_{3/2}$

motif T(N) = $R^2$ Si $O_{3/2}$ dans lesquels $R^1$, $R^2$, $R^3$ sont tels que définis dans la revendication 1 [Formule (**I**)] et les radicaux - $OR^3$ terminaux sont portés par D et/ou T et/ou T(N),
**en ce que** le ratio molaire D/D + T est inférieur ou égal à 100 %, et **en ce que** le pourcentage massique d'azote 14 par rapport à la totalité du polyorganosiloxane (**A**) est supérieur ou égal à 0,5 %.

**12.** Dispersion selon la revendication 10, **caractérisée en ce que** le composé aminé et silicié est un polyorganosiloxane formé par un copolymère comprenant les motifs récurrents suivants : D Q T (N) (OR3) avec

motif D = $R^1_2$ Si $O_{2/2}$
motif T(N) = $R^2$ Si $O_{3/2}$
motif Q = Si $O_{4/2}$

dans lesquels $R^1$, $R^2$, $R^3$ sont tels que définis dans la revendication 10 [Formule (**I**)] et les radicaux - $OR^3$ terminaux sont portés par D et/ou T(N),
**en ce que** le ratio molaire D/D + Q est inférieur ou égal à 70 %,
et **en ce que** le pourcentage massique d'azote 14 par rapport à la totalité du polyorganosiloxane (**A**) est supérieur ou égal à 0,5 %.

**13.** Dispersion selon la revendication 10, **caractérisée :**
**en ce que** le composé aminé et silicié est un polyorganosiloxane formé par un copolymère comprenant les motifs récurrents suivants : D T D (N) ($OR^3$) avec :

motif D = $R^1_2$ Si $O_{2/2}$
motif D(N) = $R^1$ $R^2$ Si $O_{2/2}$
motif T = $R^1$ Si $O_{3/2}$

dans lesquels $R^1$, $R^2$, $R^3$ sont tels que définis dans la revendication 1, 2 ou 3 [Formule (**I**)] et les radicaux - $OR^3$ terminaux sont portés par D et/ou T(N),
**en ce que** le ratio molaire D/D + T est inférieur ou égal à 100 %,
**en ce que** le paramètre z de la formule (**I**) [moles d'$OR^3$ / mole de Si] est compris entre 0,4 et 1,00,
et **en ce que** le pourcentage massique d'azote 14 par rapport à la totalité du polyorganosiloxane (**A**) est supérieur ou égal à 0,5 %.

**14.** Dispersion selon l'une quelconque des revendications 10 à 13, **caractérisée en ce que** le radical $R^2$ de la formule (**I**) répond à la formule suivante :

$$(R^4)_2\ NR^5$$

dans laquelle :

- les groupements $R^4$ sont identiques ou différents et représentent l'hydrogène ou -$R^6$-$NH_2$,
- les groupements $R^5$, $R^6$ étant des radicaux alkylènes divalents en $C_1$-$C_{10}$, éventuellement substitués,
- ou bien encore les groupements $R^4$ sont différents de l'hydrogène et forment ensemble un cycle à 5 - 7 chaînons renfermant au moins un hétéroatome.

**15.** Dispersion selon la revendication 14, **caractérisée en ce que** le composé aminé et silicié, de préférence de structure du type résine, est salifié et comprend un ou des radicaux $R^2$ de formule suivante :

**(R2)** = 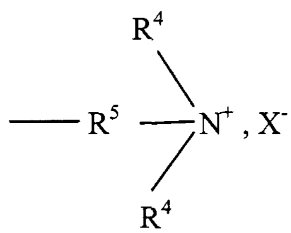

avec $R^4$ et $R^5$ tels que définis dans la revendication 8 et X représentant un contre-anion choisi parmi les carboxylates, les halogénures.

16. Dispersion selon l'une quelconque des revendications 10 à 15 **caractérisée en ce qu'**elle comporte :

- A - 100 parties en poids de l'huile silicone (**A**) à extrémités de formule : -O-Si $(OR^a)_t (R^b)_{3-t}$ dans laquelle $R^a$ est tel que défini dans la revendication 10 et $R^b$ = H ou radical hydrocarboné en $C_1$ - $C_6$, éventuellement fonctionnalisé et t = 1, 2 ou 3, cette huile ayant une viscosité η à 25 °C, supérieure ou égale à 20 000 mPa.s ;
- B - 0,5 à 10, parties en poids du tensioactif (**B**) choisi parmi les ioniques, les amphotères ou les non ioniques, ces derniers étant préférés.
- C - 0,5 à 10, parties en poids de la résine silicone (**C**) aminoalkylée, éventuellement salifiée,
- D - 0 à 20, parties en poids d'au moins une résine silicone hydroxylée (**D**) présentant, par molécule, au moins deux motifs différents choisis parmi ceux de formules : $R^7_3\,SiO_{0,5}$, $R^7_2\,SiO$, $R^7SiO_{1,5}$ et $SiO_2$, les radicaux $R^7$, identiques ou différents, étant choisis parmi les radicaux vinyle, phényle, trifluoro-3,3,3 propyle et les radicaux alkyle linéaires ou ramifiés ayant de 1 à 6 atomes de carbone inclus, ladite résine ayant une teneur pondérale en groupe hydroxyle comprise entre 0,1 et 10 %.
- E - 0 à 5, parties en poids de l'alcoxysilane (**E**) de formule $R^b_{\ 3-t}$ Si $(OR^a)_{t+1}$ dans laquelle $R^a$ et $R^b$ sont identiques ou différents et, de même que t, sont tels que définis ci-dessus.
- F - 0 à 3, parties en poids du catalyseur (**F**) de condensation.
- G - 0 à 250, parties en poids de la charge renforçante silicieuse ou non.

17. Dispersion selon l'une quelconque des revendications 10 à 16 **caractérisée en ce qu'**elle comprend au moins un agent de réticulation qui est formé :

. par la résine silicone (**C**) aminoalkylée, éventuellement salifiée, cette dernière comprenant à cette fin des molécules ayant au moins trois groupements $OR^3$ par molécule, ce qui correspond à $x+y \leq 2$ dans (**I**)
. et/ou par la résine silicone hydroxylée (**D**) apte à réagir avec les groupements $OR^a$ de (**A**),
. et/ou par l'alcoxysilane (**E**) apte à réagir avec les groupements $OR^a$ de (**A**).

18. Dispersion selon l'une quelconque des revendications 10 à 17 **caractérisée en ce que** le polydiorganosiloxane (**A**) se comporte comme un agent de réticulation comprenant, par molécule, au moins trois fonctions réactives de réticulation $OR^8$ avec $R^8$ = H ou $R^a$.

19. Dispersion selon l'une quelconque des revendications 10 à 18, **caractérisée en ce qu'**elle comprend un catalyseur (**F**).

20. Dispersion selon l'une quelconque des revendications 10 à 19, **caractérisée en ce qu'**elle est constituée par une émulsion du type huile dans eau dont l'extrait sec est supérieur ou égal à 40 % poids.

21. Mastic, matériau d'étanchéification, film ou revêtement adhérent **caractérisé en ce qu'**il comprend de la dispersion selon l'une quelconque des revendications 10 à 20 et/ou de l'élastomère réticulé issu de cette dispersion.

22. Additif actif pour compositions silicones réticulables et/ou réticulée **caractérisé en ce qu'**il comprend de la résine silicone (**C**) aminofonctionnalisée de formule (**I**) telle que définie dans les revendications 1 à 9.

**Patentansprüche**

1. Aminierte und silizierte Verbindung, die von mehreren sich wiederholenden Einheiten der folgenden durchschnittlichen Formel (**I**) gebildet ist:

$$(I)\ R^1_xR^2_y(OR^3)_zSiO_{\frac{4-(x+y+z)}{2}}$$

in der

- $R^1$ eine einwertige stickstofffreie Gruppe darstellt, die von einer sich wiederholenden Einheit zur anderen von

gleicher oder verschiedener Natur ist und Wasserstoff, einem Alkyl mit $C_1$-$C_6$, einem Aryl oder einem Alkenyl mit $C_2$-$C_8$, ggf. substituiert, entspricht, $R^2$ eine einwertige Kohlenwasserstoffgruppe darstellt, die an Silicium durch eine Si-C-Bindung gebunden ist und mindestens ein Stickstoffatom enthält und

- $R^2$ von einer wiederkehrenden Einheit zur anderen von gleicher oder verschiedener Natur ist,
- $R^3$ eine Kohlenwasserstoffgruppe mit 1 bis 18 Kohlenstoffatomen ist und
- x, y, und z positive Ganz- oder Dezimalzahlen kleiner als 4 sind und
- $x+y+z < 4$,

**dadurch gekennzeichnet, daß** sie aus sich wiederholenden alkoxylierten Einheiten (**I**) besteht, die ein Harz bilden, das eine mittlere Siliciumfunktionalität über 2 aufweist, was in der Formel (**I**) einem Wert von $x+y<2$ entspricht, wobei man ferner weiß, dass:

$1 \leq x \leq 1{,}8$;
$0{,}1 \leq y \leq 0{,}8$;
$0{,}4 \leq z \leq 1{,}0$;

gilt.

2. Verbindung nach Anspruch 1, **dadurch gekennzeichnet, dass** $R^1$ und $R^3$ insbesondere aus der Gruppe ausgewählt sind, die aus H und ggf. halogeniertem Alkyl mit $C_1$-$C_4$ besteht.

3. Verbindung nach Anspruch 2, **dadurch gekennzeichnet, dass** $R^1$, $R^3$ eine Methyl-, Ethyl-, Propyl-, Trifluoro-3,3,3-propyl-, Vinyl-, Allyl- oder Phenylgruppe ist.

4. Verbindung nach einem der Ansprüche 1 bis 3, **dadurch gekennzeichnet, dass** sie ein Polyorganosiloxan aufweist, das von einem Copolymer mit den folgenden wiederkehrenden Einheiten gebildet ist: D T T (N) ($OR^3$) mit

Einheit D = $R^1_2SiO_{2/2}$
Einheit T = $R^1SiO_{3/2}$
Einheit T(N) = $R^2SiO_{3/2}$

in denen $R^1$, $R^2$, $R^3$ die in Anspruch 1 [Formel (**I**)] angegebenen Bedeutungen haben und die endständigen $OR^3$-Gruppen von D und/oder T und/oder T(N) getragen werden,
und dass das Molverhältnis D/D+T kleiner oder gleich 50% ist.

5. Verbindung nach einem der Ansprüche 1 bis 3, **dadurch gekennzeichnet, dass** sie ein Polyorganosiloxan aufweist, das von einem Copolymer gebildet ist, das die folgenden wiederkehrenden Einheiten aufweist: D Q T (N) ($OR^3$) mit

Einheit D = $R^1_2SiO_{2/2}$
Einheit T (N) = $R^2SiO_{3/2}$
Einheit Q = $SiO_{4/2}$

in denen $R^1$, $R^2$, $R^3$ die in Anspruch 1 [Formel (**I**)] angegebenen Bedeutungen haben und die endständigen $OR^3$-Gruppen von D und/oder T(N) getragen werden,
und dass das Molverhältnis D/D+Q kleiner oder gleich 70% ist.

6. Verbindung nach einem der Ansprüche 1 bis 3, **dadurch gekennzeichnet, dass** sie ein Copolymer besitzt, das die folgenden wiederkehrenden Einheiten aufweist: D T D (N) ($OR^3$) mit

Einheit D = $R^1_2SiO_{2/2}$
Einheit D'(N) = $R^1R^2$ $SiO_{2/2}$
Einheit T = $R^1SiO_{3/2}$

in denen $R^1$, $R^2$, $R^3$ die in Anspruch 1 [Formel (**I**)] angegebenen Bedeutungen haben und die endständigen $OR^3$-Gruppen von D und/oder T(N) getragen werden,
und dass das Molverhältnis D/D+T kleiner oder gleich 100% ist.

**7.** Verbindung nach einem der Ansprüche 1 bis 6, **dadurch gekennzeichnet, dass** der Rest $R^2$ der Formel (**I**) der folgenden Formel entspricht:

$$(R^4)_2NR^5$$

in der

- die Gruppen $R^4$ gleich oder verschieden sind und Wasserstoff oder $-R^6-NH_2$ darstellen,
- die Gruppen $R^5$, $R^6$ ggf. substituierte zweiwertige Alkylenreste mit $C_1$-$C_{10}$ sind,
- oder die Gruppen $R^4$ von Wasserstoff verschieden sind und zusammen einen Ring mit 5 - 7 Gliedern bilden, die mindestens ein Heteroatom enthalten.

**8.** Verbindung nach einem der Ansprüche 1 bis 7, **dadurch gekennzeichnet, dass** sie eine Harzstruktur hat und dass sie in ein Salz überführt ist und einen Rest oder Reste $R^2$ der folgenden Formel aufweist:

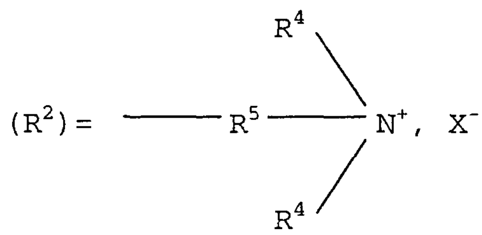

wobei R4 und R5 die in Anspruch 7 angegebenen Bedeutungen haben und X ein aus den Carboxylaten und Halogeniden ausgewähltes Gegenanion darstellt.

**9.** Verbindung nach Anspruch 8, **dadurch gekennzeichnet, dass** X ein Lactat, ein Acetat oder ein Chlorid ist.

**10.** Durch Entfernung von Wasser und ggf. Alkohol und/oder Carboxylsäure zu einem Elastomer vernetzbare wässrige Silicondispersion, die folgendes enthält:

-A- mindestens ein Polydiorganosiloxan (**A**), das pro Molekül mindestens zwei kondensierbare oder hydrolysierbare Gruppen $OR^a$ aufweist, wobei $R^a$ = H oder Alkyl ist,
-B- mindestens ein Tensid (**B**),
-C- mindestens eine aminierte und silizierte Verbindung (**C**) nach einem der Ansprüche 1 bis 3,

**dadurch gekennzeichnet, dass** die aminierte und silizierte Verbindung (C) aus der Familie ihrer alkoxylierten Derivate (z>0) ausgewählt ist,
und dass diese aminierte und silizierte Verbindung aus mehreren sich wiederholenden Einheiten (**I**)besteht, die ein Harz bilden, das eine mittlere Siliciumfunktionalität über 2 aufweist, was in der Formel (**I**) x+y<2 entspricht, wobei man ferner weiß, dass:

- $1 \leq x \leq 1{,}8$;
- $0{,}1 \leq y \leq 0{,}8$;
- $0{,}4 \leq z \leq 1{,}0$;

gilt.

**11.** Dispersion nach Anspruch 10, **dadurch gekennzeichnet, daß** die aminierte und silizierte Verbindung ein Polyorganosiloxan ist, das von einem Copolymer gebildet wird, das die folgenden wiederkehrende Einheiten umfasst: D T T (N) ($OR^3$) mit

Einheit D = $R^1{}_2SiO_{2/2}$
Einheit T = $R^1SiO_{3/2}$
Einheit T (N) = $R^2SiO_{3/2}$ in denen $R^1$, $R^2$, $R^3$ die in Anspruch 1 [Formel (**I**)] angegebenen Bedeutungen haben

und die endständigen $OR^3$-Gruppen von D und/oder T und/oder T(N) getragen werden,
dass das Molverhältnis D/D'+T kleiner oder gleich 100% ist und dass der Massenprozentsatz von Stickstoff 14 bezüglich des gesamten Polyorganosiloxans (**A**) größer oder gleich 0,5 % ist.

**12.** Dispersion nach Anspruch 10, **dadurch gekennzeichnet, dass** die aminierte und silizierte Verbindung ein Polyorganosiloxan ist, das von einem Copolymer gebildet wird, das die folgenden wiederkehrenden Einheiten umfasst: D Q T (N) ($OR^3$) mit

Einheit D = $R^1{}_2SiO_{2/2}$
Einheit T(N) = $R^2SiO_{3/2}$
Einheit Q = $SiO_{4/2}$

in denen $R^1$, $R^2$, $R^3$ die in Anspruch 10 [Formel (**I**)] angegebenen Bedeutungen haben und die endständigen $OR^3$-Gruppen von D und/oder T(N) getragen werden,
dass das Molverhältnis D/D+Q kleiner oder gleich 70% ist und dass der Massenprozentsatz von Stickstoff 14 bezüglich des gesamten Polyorganosiloxans (**A**) größer oder gleich 0,5 % ist.

**13.** Dispersion nach Anspruch 10, **dadurch gekennzeichnet, dass** die aminierte und silizierte Verbindung ein Polyorganosiloxan ist, das von einem Copolymer gebildet wird, das die folgende wiederkehrende Einheiten aufweist: D T D (N) ($OR^3$) mit

Einheit D = $R^1{}_2SiO_{2/2}$
Einheit D(N) = $R^1R^2SiO_{2/2}$
Einheit T = $R^1SiO_{3/2}$

in denen $R^1$, $R^2$, $R^3$ die in Anspruch 1, 2 oder 3 [Formel (**I**)] angegebenen Bedeutungen haben und die endständigen $OR^3$-Gruppen von D und/oder T(N) getragen werden,
dass das Molverhältnis D/D+T kleiner oder gleich 100% ist,
dass der Parameter z der Formel (**I**) [Mole $OR^3$/Mol Si] zwischen 0,4 und 1,00 liegt und
dass der Massenprozentsatz von Stickstoff 14 bezüglich des gesamten Polysiloxans (**A**) größer oder gleich 0,5 % ist.

**14.** Dispersion nach einem der Ansprüche 10 bis 13, **dadurch gekennzeichnet, dass** der Rest $R^2$ der Formel (**I**) der folgenden Formel entspricht:

$$(R^4)_2NR^5$$

in der

- die Gruppen $R^4$ gleich oder verschieden sind und Wasserstoff oder $-R^6-NH_2$ darstellen,
- die Gruppen $R^5$, $R^6$ ggf. substituierte zweiwertige Alkylenreste mit $C_1$-$C_{10}$ sind,
- oder die Gruppen $R^4$ gleich oder verschieden sind und zusammen einen Ring mit 5 - 7 Gliedern bilden, die mindestens ein Heteroatom enthalten.

**15.** Dispersion nach Anspruch 14, **dadurch gekennzeichnet, dass** die aminierte und silizierte Verbindung, die vorzugsweise Harzstruktur aufweist, in ein Salz überführt ist und einen Rest oder Reste $R^2$ der folgenden Formel aufweist:

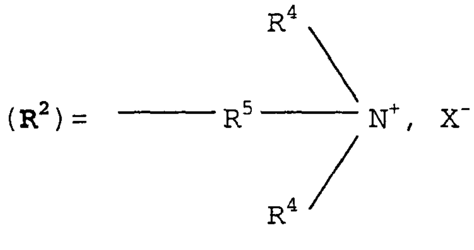

wobei $R^4$ und $R^5$ die in Anspruch 7 angegebenen Bedeutungen haben und X ein aus den Carboxylaten und Halogeniden ausgewähltes Gegenanion darstellt.

**16.** Dispersion nach einem der Ansprüche 10 bis 15, **dadurch gekennzeichnet, dass** sie umfasst:

-A- 100 Gew.-Teile Siliconöl (**A**) mit Enden der Formel: $-O-Si(OR^a)_t(R^b)_{3-t}$, in der $R^a$ die in Anspruch 10 angegebene Bedeutung hat und $R^b$ = H oder Kohlenwasserstoffrest mit $C_1$-$C_{10}$, ggf. funktionalisiert, ist und t = 1, 2 oder 3, wobei dieses Öl eine Viskosität η bei 25°C größer oder gleich 20 000 mPa.s besitzt;
-B- 0,5 bis 10 Gew.-Teile Tensid (**B**), das aus den ionischen, amphoteren oder nichtionischen ausgewählt ist, wobei letztere bevorzugt werden;
-C- 0,5 bis 10 Gew.-Teile aminoalkyliertes Siliconharz (**C**), ggf. in ein Salz überführt;
-D- 0 bis 20 Gew.-Teile mindestens eines hydroxylierten Siliconharzes (**D**), das pro Molekül mindestens zwei verschiedene Einheiten aufweist, die aus denen der Formeln $R^7{}_3SiO_{0,5}$, $R^7{}_2SiO$, $R^7SiO_{1,5}$ und $SiO_2$ ausgewählt sind, wobei die Reste $R^7$, die gleich oder verschieden sind, aus den Vinyl-, Phenyl-, Trifluoro-3,3,3-propyl-Resten und den unverzweigten oder verzweigten Alkylresten mit 1 bis 6 eingeschlossenen Kohlenstoffatomen ausgewählt sind, wobei dieses Harz einen Gewichtsgehalt an Hydroxylgruppe zwischen 0,1 und 10% aufweist;
-E- 0 bis 5 Gewichtsteile Alkoxysilan (**E**) der Formel $R^b{}_{3-t}Si(OR^a)_{t+1}$, in der $R^a$ und $R^b$ gleich oder verschieden sind und, ebenso wie t, die oben angegebenen Bedeutungen haben;
-F- 0 bis 3 Gew.-Teile Kondensationskatalysator (**F**);
-G- 0 bis 250 Gew.-Teile verstärkender Füllstoff, siliziumhaltig oder nicht.

**17.** Dispersion nach einem der Ansprüche 10 bis 16, **dadurch gekennzeichnet, dass** sie mindestens ein Vernetzungsmittel enthält, das gebildet ist:

- von dem aminoalkylierten Siliconharz (**C**), ggf. in ein Salz überführt, wobei dieses zu diesem Zweck Moleküle aufweist, die mindestens drei $OR^3$-Gruppen pro Molekül besitzen, was $x+y \leq 2$ in (**I**) entspricht,
- und/oder von dem hydroxylierten Siliconharz (**D**), das mit den $OR^a$-Gruppen von (**A**) reagieren kann,
- und/oder von dem Alkoxysilan (**E**), das mit den $OR^a$-Gruppen von (**A**) reagieren kann.

**18.** Dispersion nach einem der Ansprüche 10 bis 17, **dadurch gekennzeichnet, dass** das Polydiorganosiloxan (**A**) sich wie ein Vernetzungsmittel verhält, das pro Molekül mindestens drei reaktive Vernetzungsfunktionen $OR^8$ besitzt, wobei $R^8$ = H oder $R^a$.

**19.** Dispersion nach einem der Ansprüche 10 bis 18, **dadurch gekennzeichnet, dass** sie einen Katalysator (**F**) enthält.

**20.** Dispersion nach einem der Ansprüche 10 bis 19, **dadurch gekennzeichnet, dass** sie von einer Öl-in-Wasser-Emulsion gebildet wird, deren Trockenextrakt größer oder gleich 40 Gew.-% ist.

**21.** Adhäsiver Kitt, Dichtungsstoff, Film oder Überzug,
**dadurch gekennzeichnet, dass** er eine Dispersion nach einem der Ansprüche 10 bis 20 und/oder aus dieser Dispersion hervorgegangenes vernetztes Elastomer enthält.

**22.** Aktiver Zusatz für vernetzbare und/oder vernetzte Siliconzusammensetzungen, **dadurch gekennzeichnet, dass** er aminofunktionalisiertes Siliconharz (**C**) der Formel (**I**) gemäß den Ansprüchen 1 bis 9 enthält.

## Claims

**1.** Aminated silicon-containing compound comprising one or more recurring units of the following average formula (**I**):

$$(I)\ R^1{}_x R^2{}_y\ (OR^3)_z\ Si\ O_{\frac{4-(x+y+z)}{2}}$$

in which:

- $R^1$ represents a monovalent group which is free from nitrogen, is identical or different from one recurring unit

to the other, and corresponds to hydrogen, a $C_1$-$C_6$ alkyl, an aryl or a $C_2$-$C_8$ alkenyl, optionally substituted;

- $R^2$ represents a monovalent hydrocarbon group which is linked to silicon by a Si-C bond and which contains at least one nitrogen atom, and $R^2$ is identical or different from one recurring unit to the other;
- $R^3$ is a hydrocarbon group comprising from 1 to 18 carbon atoms;
- x, y and z are integers or positive decimals lower than 4; and
- $x+y+z < 4$;

**characterized in that** it consists of alkoxylated recurring units (**I**) forming a resin having an average functionality in silicon greater than 2, what corresponds in formula (**I**) to $x+y < 2$, given that also :

$1 \leq x \leq 1.8$ ;
$0.1 \leq y \leq 0.8$ ;
$0.4 \leq z \leq .1.0$;

**2.** Compound according to claim 1, **characterized in that** $R^1$ and $R^3$ are more particularly selected in the group comprising : H, $C_1$-$C_4$ alkyl, optionally halogenated.

**3.** Compound according to claim 2, **characterized in that** $R^1$, $R^3$ is a methyl, ethyl, propyl, 3,3,3-trifluoropropyl, vinyl, allyl or phenyl group.

**4.** Compound according to any of claims 1 to 3, **characterized in that** it comprises a polyorganosiloxane consisted of a copolymer comprising the following recurring units: DTT(N) ($OR^3$) in which:

D unit = $R^1_2$ Si $O_{2/2}$
T unit = $R^1$ Si $O_{3/2}$
T(N) unit = $R^2$ Si $O_{3/2}$

wherein:
$R^1$, $R^2$ and $R^3$ are as defined in claim 1 [formula (**I**)] and the terminal $-OR^3$ radicals are carried by D and/or T and/or T(N);
and **in that** the molar ratio D/(D+T) is inferior or equal to 50%.

**5.** Compound according to any of claims 1 to 3, **characterized in that** it comprises a polyorganosiloxane consisted of a copolymer comprising the following recurring units: D, Q, T(N) ($OR^3$) in which:

D unit = $R^1_2$ Si $O_{2/2}$
T(N) unit = $R^2$ Si $O_{3/2}$
Q unit = Si $O_{4/2}$

wherein:
$R^1$, $R^2$ and $R^3$ are as defined in claim 1 [formula (**I**)] and the terminal $-OR^3$ radicals are carried by D and/or T(N);
and **in that** the molar ratio D/(D+Q) is inferior or equal to 70%.

**6.** Compound according to any of claims 1 to 3, **characterized in that** it comprises a polyorganosiloxane consisted of a copolymer comprising the following recurring units: D, T, D(N) ($OR^3$) in which:

D unit = $R^1_2$ Si $O_{2/2}$
D(N) unit = $R^1$ $R^2$ Si $O_{2/2}$
T unit = $R^1$ Si $O_{3/2}$

wherein:
$R^1$, $R^2$ and $R^3$ are as defined in claim 1 [formula (**I**)] and the terminal $-OR^3$ radicals are carried by D and/or T(N), the molar ratio D/(D+T) is inferior or equal to 100%.

**7.** Compound according to any of claims 1 to 6, **characterized in that** the radical $R^2$ of the formula (**I**) has the following formula:

$(R^4)_2NR^5$

in which:

- the $R^4$ groups are identical or different and represent hydrogen or $-R^6-NH_2$,
- the $R^5$ and $R^6$ groups are divalent $C_1-C_{10}$ alkylene radicals which are optionally substituted,
- or the $R^4$ groups are different from hydrogen and together form a 5-7 membered ring containing at least one heteroatom.

**8.** Compound according to any of claims 1 to 7, **characterized in that** it has a resin type structure and **in that** it is salified and comprises one or more $R^2$ radicals of the following formula :

**(R2)** =
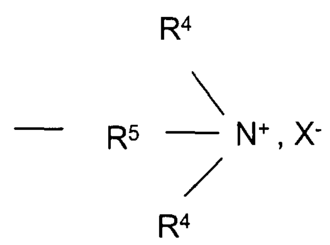

with $R^4$ and $R^5$ groups as defined in claim 7 and X represents a counter-anion selected from the group consisting of carboxylates and halides.

**9.** Compound according to claim 8, **characterized in that** X represents a lactate, an acetate or a chloride.

**10.** Aqueous silicone dispersion capable of being cross-linked into an elastomer by removal of water and, optionally, alcohol and/or carboxylic acid, said dispersion comprising:

-A- at least one polydiorganosiloxane (**A**) having at least two condensable or hydrolyzable $OR^a$ groups per molecule with $R^a$ =H or alkyl,
-B- at least one surfactant (**B**),
-C- at least one aminated silicon-containing compound (**C**) as defined in any claims 1 to 3,

**characterized in that** the aminated silicon compound (**C**) is selected from the family of its alkoxylated derivates ($z > 0$),
and **in that** said aminated silicon compound consists of alkoxylated recurring units (**I**) forming a resin having an average functionality in silicon greater than 2, what corresponds in formula (**I**) to $x + y < 2$, given that also :

$1 \leq x \leq 1.8$ ;
$0.1 \leq y \leq 0.8$ ;
$0.4 \leq z \leq 1.0$

**11.** Dispersion according to claim 10, **characterized in that** the aminated silicon compound (**C**) is a polyorganosiloxane consisted of a copolymer comprising the following recurring units: DTT(N) ($OR^3$) in which:

D unit = $R^1_2$ Si $O_{2/2}$
T unit = $R^1$ Si $O_{3/2}$
T(N) unit = $R^2$ Si $O_{3/2}$

wherein:
$R^1$, $R^2$ and $R^3$ are as defined in claim 1 formula (I) and the terminal $-OR^3$ radicals are carried by D and/or T and/or T(N),
**in that** the molar ratio D/(D+T) is inferior or equal to 100%,
and **in that** the mass percentage of nitrogen 14 with respect to the totality of the polyorganosiloxane (**A**) is greater than or equal to 0.5%.

**12.** Dispersion according to claim 10, **characterized in that** the aminated silicon compound (**C**) is a polyorganosiloxane consisted of a copolymer comprising the following recurring units: D, Q, T(N) ($OR^3$) in which:

D unit = $R^1_2$ Si $O_{2/2}$
T(N) unit = $R^2$ Si $O_{3/2}$
Q unit = Si $O_{4/2}$

wherein:
$R^1$, $R^2$ and $R^3$ are as defined in claim 10 [formula (**I**)] and the terminal -$OR^3$ radicals are carried by D and/or T(N), and **in that** the molar ratio D/(D+Q) is inferior or equal to 70%,
and **in that** the mass percentage of nitrogen 14 with respect to the totality of the polyorganosiloxane (**A**) is greater than or equal to 0.5%.

**13.** Dispersion according to claim 10, **characterized in that** the aminated silicon compound is a polyorganosiloxane consisted of a copolymer comprising the following recurring units: D, T, D(N) ($OR^3$) in which:

D unit = $R^1_2$ Si $O_{2/2}$
D(N) unit = $R^1$ $R^2$ Si $O_{2/2}$
T unit = $R^1$ Si $O_{3/2}$

wherein
$R^1$, $R^2$ and $R^3$ are as defined in claim 1, 2 or 3 [formula (**I**)] and the terminal -$OR^3$ radicals are carried by D and/or T(N),
**in that** the molar ratio D/(D+T) is inferior or equal to 100%,
and **in that** the parameter z of formula (I) [moles of $OR^3$ / mole of Si] is comprised between 0.4 and 1.00,
and **in that** the mass percentage of nitrogen 14 with respect to the totality of the polyorganosiloxane (A) is greater than or equal to 0.5%.

**14.** Dispersion according to any of claims 10 to 13, **characterized in that** the radical $R^2$ of the formula (**I**) has the following formula:

$$(R^4)_2NR^5$$

in which:

- the $R^4$ groups are identical or different and represent hydrogen or -$R^6$-$NH_2$,
- the $R^5$ and $R^6$ groups are divalent $C_1$-$C_{10}$ alkylene radicals which are optionally substituted,
- or the $R^4$ groups are different from hydrogen and together form a 5-7 membered ring containing at least one heteroatom.

**15.** Dispersion according to claim 14, **characterized in that** the aminated silicon-containing compound, preferably of resin type structure, is salified and comprises one or more $R^2$ radicals of the following formula :

(**R2**) =

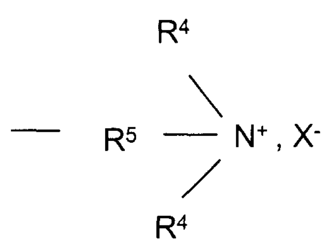

with $R^4$ and $R^5$ groups as defined in claim 7 and X represents a counter-anion selected from the carboxylates, the halides.

**16.** Dispersion according to any of claims 10 to 15, **characterized in that** it comprises:

-A- 100 parts by weight of the silicone oil (**A**) with terminals of formula: $-O-Si(OR^a)_t (R^b)_{3-t}$ in which $R^a$ is as defined in claim 10, and $R^b$ =H or $C_1$-$C_6$ hydrocarbon radical, optionally functionalized, and t = 1.2 or 3, this oil having a viscosity .η. at 25°C., greater than or equal to 20,000 mPa.s ;
-B- 0.5 to 10 parts by weight of the surfactant (**B**) selected from the ionic, amphoteric or non-ionic surfactants; the latter being preferred ;
-C- 0.5 to 10 parts by weight of the aminoalkylated silicone resin (**C**), optionally salified ;
-D- 0 to 20 parts by weight of at least one hydroxylated silicone resin (**D**) having, per molecule, at least two different units selected from those of formulas : $R^7_3 SiO_{0.5}$, $R^7_2 SiO$ and $SiO_2$;
wherein the $R^7$ radicals are identical or different, and are selected from the group consisting of vinyl, phenyl, 3,3,3-trifluoropropyl radicals, and the linear or branched alkyl radicals having from 1 to 6 carbon atoms inclusive, said resin having a hydroxyl group content by weight between 0.1 and 10% ;
-E- 0 to 5 parts by weight of the alkoxysilane (**E**) of formula $R^b_{3-t} Si(OR^a)_{t+1}$ in which $R^a$, and $R^b$ are identical or different and, as t, are as defined above ;
-F- 0 to 3 parts by weight of the condensation catalyst (**F**);
-G- 0 to 250 parts by weight of the optionally siliceous reinforcing filler.

**17.** Dispersion according to any of claims 10 to 16, **characterized in that** it comprises at least one cross-linking agent consisted of:

- the aminated silicone resin (**C**), optionally salified, the latter comprising to this end molecules having at least three $OR^3$ groups per molecule, which corresponds to $x + y \leq 2$;
- and/or the hydroxylated silicone resin (**D**) capable of reacting with the $OR^a$ groups of (**A**);
- and/or the alkoxysilane (**E**) capable of reacting with the $OR^a$ groups of (**A**).

**18.** Dispersion according to any of claims 10 to 17, **characterized in that** the polydiorganosiloxane (A) behaves as a cross-linking agent comprising, per molecule, at least three cross-linking reactive functions $OR^8$ with $R^8$ = H or $R^a$.

**19.** Dispersion according to any of claims 10 to 18, **characterized in that** it comprises a catalyst (**F**).

**20.** Dispersion according to any of claims 10 to 19, **characterized in that** it consists of an emulsion of oil in water whose dry extract is greater than or equal to 40 wt %.

**21.** Adhesive mastic, sealing material, film or coating **characterized in that** it comprises some of the dispersion according to any of claims 10 to 20 and/or some of the cross-linked elastomer derived from said dispersion.

**22.** Active additive for silicone compositions which are cross-linked or capable of being cross-linked, **characterized in that** it comprises the aminofunctionalized silicone resin (**C**) of formula (**I**) as defined in claims 1 to 9.

FIG.1

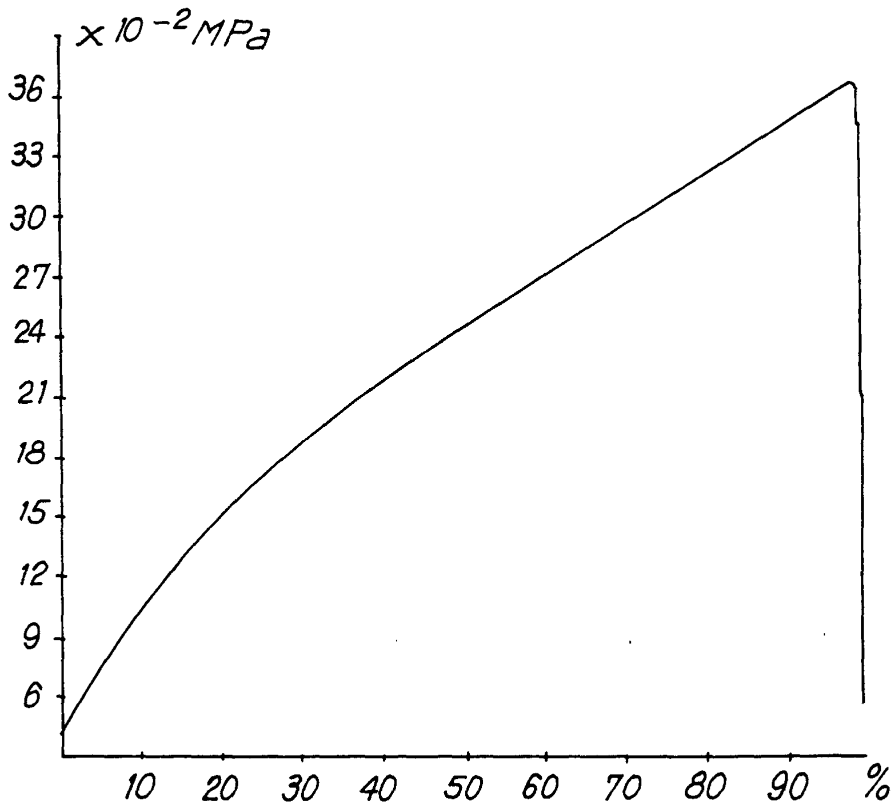
x 10^-2 MPa
36
33
30
27
24
21
18
15
12
9
6
10
20
30
40
50
60
70
80
90
%

FIG.2

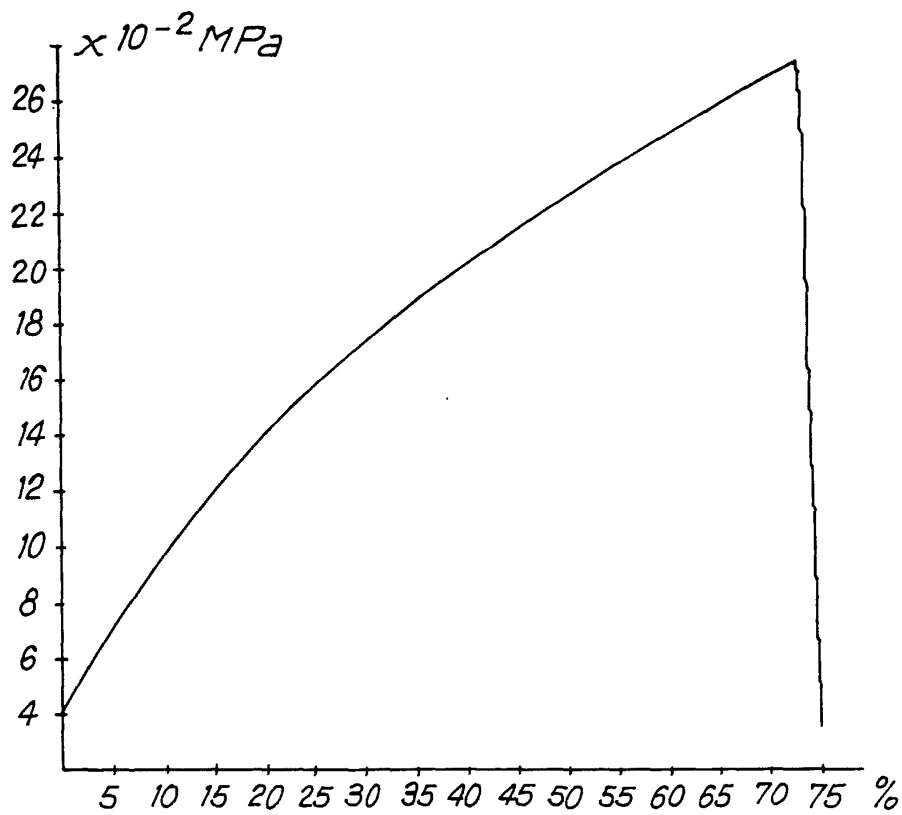
x 10^-2 MPa
26
24
22
20
18
16
14
12
10
8
6
4
5
10
15
20
25
30
35
40
45
50
55
60
65
70
75
%